# EUROPÄISCHE PATENTANMELDUNG

(11) **EP 3 228 411 A1**
(43) Veröffentlichungstag der Anmeldung: **11.10.2017**
(21) Anmeldenummer: 16000807.4
(22) Anmeldetag: 08.04.2016
(51) Int. Cl.: B23G 5/18, B23G 1/32

(54) **WERKZEUG ZUR MATERIALABTRAGENDEN BEARBEITUNG EINES WERKSTÜCKS**

(71) Anmelder: DC Swiss SA, 2735 Malleray (CH)
(72) Erfinder: KAUFMANN, Beat, 2735 Malleray (CH)
(74) Vertreter: Willy, Otto Martin

(57) **Zusammenfassung**

Die Erfindung betrifft ein Werkzeug (1) zur materialabtragenden Bearbeitung eines Werkstücks. Das Werkzeug (1) weist ein proximales und ein distales Ende auf. Weiter umfasst das erfindungsgemässe Werkzeug einen Schaft (2) zur Verbindung des Werkzeugs (1) im Bereich des proximalen Endes mit einem Antrieb und einen Werkzeugkopf (3) im Bereich des distalen Endes. Das erfindungsgemässe Werkzeug (1) umfasst weiter Schneidelemente (4, 4.1, ..., 4.5, 5.1, ..., 5.3) am Werkzeugkopf (3), wobei die Schneidelemente (4, 4.1, ..., 4.5, 5.1, ..., 5.3) so ausgestaltet sind, dass sie in das zu bearbeitende Werkstück einzudringen vermögen und eine Materialschicht aus dem besagten Werkstück abzutragen vermögen. Die Schneidelemente (4, 4.1, ..., 4.5, 5.1, ..., 5.3) umfassen weiter mindestens einen Schneidzahn (4, 4.1, ..., 4.5) mit einem Schneidzahngrat (D6, D6.1, ... D6.5) und einer Schneidzahnwurzel (D7, D7.1, ... D7.5). Sie umfassen weiter mindestens eine Schneidbacke (5, 5.1, ..., 5.5) mit einem Schneidbackengrat (D8, D8.1, ... D8.5) und einer Schneidbackenwurzel (D9, D9.1, ..., D9.5). Beim erfindungsgemässen Werkzeug (1) ist das Verhältnis zwischen Schneidzahngrat (D6, D6.1, ... D6.5) und Schneidzahnwurzel (D7, D7.1, ... D7.5) kleiner, als das Verhältnis zwischen Schneidbackengrat (D8, D8.1, ... D8.5) und Schneidbackenwurzel (D9, D9.1, ..., D9.5). Insbesondere ist das Verhältnis zwischen zwei und zehnmal kleiner.

## Beschreibung

### TECHNISCHES GEBIET

Die vorliegende Erfindung betrifft ein Werkzeug zur materialabtragenden Bearbeitung eines Werkstücks. Weiter betrifft die Erfindung ein entsprechendes Verfahren zur Herstellung eines Formteils durch materialabtragende Bearbeitung eines Werkstücks mit einem erfindungsgemässen Werkzeug, sowie entsprechender resultierender Formteile.

Weitere Aspekte der Erfindung befassen sich mit der Anordnung von Kühlkanälen an einem Werkzeug zur materialabtragenden Bearbeitung eines Werkstücks, sowie mit der Geometrie und Anordnung von Schneidelementen an einem solchen Werkzeug.

### STAND DER TECHNIK

In der Fertigungstechnik ist es üblich, um eine gewünschte Endform eines Werkstücks zu erhalten, überschüssiges Material von einer Grundform abzutragen, um dem Werkstück die endgültige Form zu verleihen. Solche Fertigungsverfahren werden mit einer Vielzahl an vorgefertigten oder belassenen Materialien, wie Holz, Metall und/oder Kunststoff durchgeführt. Meist wird dazu ein materialabtragendes Werkzeug verwendet, welches in der Regel aus einem härteren Material besteht als das zu bearbeitende Werkstück. Allen materialabtragenden Verfahren ist gemeinsam, dass sie durch die Bearbeitung eine Reduktion des Volumens des Werkstücks bewirken.

Zu den gängigsten materialabtragenden Verfahren gehört das Zerspanen nach DIN 8589. Zu den zerspanenden Verfahren wird unter anderem auch das Fräsen, Bohren und Schleifen gezählt. Die Prozesse sind zumeist maschinell gesteuert und angetrieben. Neben der Materialwahl sind die Geometrie und die Form des Werkzeugs für den konkreten Bearbeitungserfolg und die erzielte Form entscheidend. In vielen Bereichen und bei der Erzeugung von komplexen Formteilen findet der Prozess in einem mehrstufigen Verfahren statt. So kann zum Beispiel zunächst mit einem ersten Werkzeug ein erster materialabtragender Schritt durchgeführt werden, welcher eine grobe Vorformung des Werkstücks vornimmt. Ein zweites, präziseres Werkzeug kann dann eingesetzt werden, um der vorgeformten Form eine endgültige Struktur zu verleihen.

Besondere Herausforderungen stellen sich bei materialabtragenden Bearbeitungen, welche besonders kleine oder filigrane Strukturen umfassen. Insbesondere in der Feinmechanik müssen zum Beispiel Gewinde in Bereichen von 0,3 bis 3mm für die Uhrenindustrie oder die Medizinaltechnik hergestellt werden. Allen materialabtragenden Bearbeitungen ist gemeinsam, dass das abgetragene Material anfällt. Daher zählt zu den Herausforderungen dieser Verfahren, auch die Sicherstellung eines geeigneten Materialabtransports und möglichst die Vermeidung einer Kontamination des zu erzeugenden Formteils mit abgetragenen Material. Bei einem Gewinde kann solches Material zum Beispiel das Gewinde verstopfen und unbrauchbar machen.

Bei maschinellen sowie manuellen Abtrageverfahren entsteht häufig durch den Kontakt des Werkzeugs mit dem Werkstück Abwärme durch Reibung. Die Kontrolle der Abwärme und das Verhindern, dass eine exzessive Abwärme das Werkstück beschädigt oder zu unerwünschten Materialmodifikationen führt, ist eine weitere Herausforderung der materialabtragenden Bearbeitungsverfahren.

Die EP 2 801 432 A2 (Kaufmann, B.) zeigt ein Verfahren und ein entsprechendes Werkzeug zur Herstellung eines Gewindes oder einer Gewindebohrung. Der verwendete und gezeigte Fräser hat einen im Wesentlichen dreieckigen Profilquerschnitt. Jede "Ecke" ist mit einem Kamm versehen, welcher über eine Reihe an Zähnen verfügt, die in einem bestimmten Abstand zueinanderstehen. Die Kämme der anderen "Ecken" sind ebenfalls bezahnt und zwar im gleichen Abstand. Dabei sind diese aber gegenüber den Zähnen der anderen Kämme versetzt angeordnet. Dadurch kann ein besonders geführtes Gewinde gefräst werden, welches nicht durch die Form des Fräsers, sondern lediglich durch die Führung des Fräsers bestimmt wird. Durch die dichte Bezahnung kann sich allerdings der Abtransport der Späne unter Umständen als schwierig gestalten. Weiter kann je nach Härte des zu bearbeitenden Materials durch ein solches Werkzeug, unter Umständen, die Entgratung ungenügend ausfallen. Grate sind insbesondere bei medizinaltechnischen verwendeten Gewinden an Implantaten besonders unerwünscht, da sie mögliche Kontaminationsstellen oder Oberflächen bilden, welche von Belägen besiedelt werden können.

Ein Gewindebohrer, welcher auf eine umfassende Bezahnung verzichtet, ist in der DE 20 2007 010 616 U1 gezeigt. Der gezeigte Gewindefräser ist für bestimmte Gewindegrössen (M 0,6 bis M 6) vorgesehen und hat einen Werkzeugkopf mit in seiner einfachsten Ausführungsform einem einzigen Schneidezahn. Am Schneidezahn angrenzend befinden sich zwei geradlinige Schneidflanken und definieren mit diesen einen nach dem herzustellenden Gewinde ausgewählten Winkel. Um eine saubere Entgratung und Materialabtragung zu gewährleisten, ist zwischen der Schneidflanke und den angrenzenden Längsschneiden ein Übergangsradius gebildet. Auch dieses Werkzeug ist so ausgestaltet, dass sich die Form eines resultierenden Gewindes lediglich aus der Führung des Werkzeugs und nicht aus der Geometrie und Anordnung der Schneidelemente am Werkzeugkopf ergibt. Ein Nachteil dieses Gewindes ist allerdings die sicherlich sehr hohen Fertigungskosten, da die Prozesse zur Herstellung eines Übergangsradius sehr aufwändig sind. Es stellt sich auch die Frage, inwiefern bei besonders kleinskaligen Gewindewirblern eine Sicherstellung eines solchen Radius im entsprechenden Werkzeug fertigungstechnisch überhaupt möglich ist.

Somit steht fest, dass ein Bedarf nach einem Werkzeug zur materialabtragenden Bearbeitung von Werkstücken besteht, welches einerseits die erforderliche Präzision aufweisen kann, um auch sehr feine und kleinskalige Ausnehmungen an den entsprechenden Werkstücken vorzunehmen, und andererseits günstig und in zuverlässiger Qualität herstellbar ist.

### DARSTELLUNG DER ERFINDUNG

Es ist somit eine Aufgabe der vorliegenden Erfindung, ein Werkzeug zur materialabtragenden Bearbeitung eines Werkstücks bereitzustellen, welches mindestens einen Nachteil des Bekannten überwindet. Insbesondere soll ein solches Werkzeug bereitgestellt werden, welches einfach und effizient herzustellen ist und gut geeignet ist, um bei materialabtragenden Bearbeitung eingesetzt zu werden, die eine hohe Präzision erfordern. Insbesondere soll weiter ein solches Werkzeug bereitgestellt werden, welches Grate und Späne, welche bei der materialabtragenden Bearbeitung anfallen, von der zu erzeugenden Form effizient abträgt.

Diese Aufgabe wurde mit einem Werkzeug gemäss kennzeichnendem Teil der unabhängigen Ansprüche der vorliegenden Erfindung gelöst.

Ein Aspekt der vorliegenden Erfindung betrifft ein Werkzeug zur materialabtragenden Bearbeitung eines Werkstücks. Das Werkzeug weist ein proximales und ein distales Ende auf. Weiter umfasst das erfindungsgemässe Werkzeug einen Schaft zur Verbindung des Werkzeugs im Bereich des proximalen Endes mit einem Antrieb und einen Werkzeugkopf im Bereich des distalen Endes. Das erfindungsgemässe Werkzeug umfasst weiter Schneidelemente am Werkzeugkopf, wobei die Schneidelemente so ausgestaltet sind, dass sie in das zu bearbeitende Werkstück einzudringen vermögen und eine Materialschicht aus dem besagten Werkstück abzutragen vermögen. Die Schneidelemente umfassen weiter mindestens einen Schneidzahn mit einem Schneidzahngrat und einer Schneidzahnwurzel. Sie umfassen weiter mindestens eine Schneidbacke mit einem Schneidbackengrat und einer Schneidbackenwurzel. Beim erfindungsgemässen Werkzeug ist das Verhältnis zwischen Schneidzahngrat und Schneidzahnwurzel kleiner, als das Verhältnis zwischen Schneidbackengrat und Schneidbackenwurzel. Insbesondere ist das Verhältnis zwischen zwei und zehnmal kleiner.

Im Sinne der vorliegenden Erfindung ist ein Werkzeug zur materialabtragenden Bearbeitung geeignet, wenn es dafür ausgelegt ist, in einem mechanischen Bearbeitungsverfahren ein Werkstück in eine gewünschte Form zu bringen, indem überflüssiges Material vom Werkstück in Form von Spänen abgetragen wird. Die Materialabtragende Bearbeitung kann an einem beliebigen Material durchgeführt werden. Besonders bevorzugt ist die materialabtragende Bearbeitung an einem metallischen Material durchgeführt. In einer besonders bevorzugten Ausführungsform handelt es sich bei der erfindungsgemässen materialabtragenden Bearbeitung um ein Fräsen eines Werkstücks, insbesondere einem metallischen Werkstück. Besonders bevorzugt ist dieses Fräsen eines Werkstücks das Fräsen eines Gewindes.

Im Sinne der vorliegenden Erfindung seien die Begriffe proximales und distales Ende als bezüglich der Orientierung des Werkzeugs im Verhältnis zum Werkstück und zur Maschine zu verstehen. In diesem Sinne handelt es sich beim proximalen Ende um das verhältnismässig zum Antrieb nähere Ende, während das distale Ende das entsprechend entfernte, respektive dem Werkstück nahe Ende bezeichnet.

In einer besonderen Ausführungsform ist der Schaft geeignet zur Verbindung des Werkzeugs im Bereich des proximalen Endes mit einem Spindelantrieb. Geeignet sind grundsätzlich eine Reihe von Antriebsarten. Besonders gut ist ein Antrieb geeignet, welches den Schaft und somit auch den Werkzeugkopf in eine Rotationsbewegung um seine Längsachse antreiben kann. Je nach Art der Verarbeitung kann der Antrieb auch ausgelegt sein, um weitere Freiheitsgrade zu bedienen. So kann in einer besonders bevorzugten Ausführungsform der Antrieb sowohl ausgelegt sein, um das Werkzeug in eine Rotationsbewegung um seine Längsachse anzutreiben, als auch das Werkzeug um eine transversale Bewegung entlang seiner Längsachse anzutreiben. Besonders bei Gewindefräsern ist weiter bevorzugt, dass der Antrieb zusätzlich zu den genannten Bewegungen eine helikale Bewegung um eine weitere Zentralachse auszuführen vermag. Verschiedene Freiheitsgrade können auch durch verschiedene Antriebe bereitgestellt werden. So kann ein Linearantrieb für die transversale Bewegbarkeit des Werkzeugs oder des Werkstücks vorgesehen sein, während ein Rotationsantrieb für die Rotation des Werkzeugs vorgesehen sein kann.

Im Sinne der vorliegenden Erfindung kann ein Schaft geeignet sein zur Verbindung des Werkzeugs im Bereich des proximalen Endes mit einem Antrieb, wenn er strukturell Merkmale aufweist, welche eine kraftschlüssige Wirkverbindung mit dem Antrieb ermöglichen. In der einfachsten Ausführungsform kann der Schaft lediglich durch seine Ausdehnung entlang seiner Längsachse in einer Mündung eines Antriebs eingepasst und mechanisch durch einen lösbaren Verschluss gehalten sein.

Im Sinne der vorliegenden Erfindung soll das Verhältnis zwischen Schneidzahngrat und Schneidzahnwurzel, respektive zwischen Schneidbackengrat und Schneidbackenwurzel ein Distanzverhältnis darstellen. Diese Distanz kann wie folgt definiert werden: Die Breite des entsprechenden Schneidelements im Querschnitt durch die Längsachse des Werkzeugs in einer parallelen Richtung zur Längsachse des Werkzeugs.

Im Sinne der vorliegenden Erfindung kann unter dem Schneidzahngrat die am weitesten entfernte Kante ausgehend von der zentralen Längsachse durch den Mittelpunkt des Werkzeugs des Schneidzahns verstanden werden. Entsprechend kann die Schneidzahnwurzel als Distanz zwischen den beiden einen Schneidzahn flankierenden Flanken in einer Parallelen zur Längsachse angesehen werden, wo die Distanz am weitesten ist. Analog können Schneidbackengrat und Schneidbackenwurzel definiert sein. Im Sinne dieser Definition ist der Schneidzahngrat eines bestimmten Schneidzahns bestimmt durch den Radius den er bezüglich des Mittelpunktes durch die Umdrehung um die Längsachse des Werkzeugs durch diesen Mittelpunkt definiert. Analog ist die Schneidzahnwurzel bestimmt durch den Radius an der Stelle wo der Schneidzahn beginnt, das heisst, wo die flankierenden Kanten (welche im Wesentlichen parallel zur Längsachse verlaufen) in die Schneidzahnflanken münden. Sind die beiden Schneidzahnflanken unterschiedlich lang, so können gemäss dieser Definition zwei Schneidzahnwurzelradien bestehen. Analog kann auch für die Schneidzahnbacke der Schneidbackengrat als weitester Punkt um den Mittelpunkt als Radius definiert sein und die Schneidbackenwurzel als Radius welcher definiert wird aus der Distanz auf einer Senkrechten zur zentralen Längsachse des Werkzeugs bis zum Beginn der Schneidbackenflanken.

Bei radial verlaufenden Schneidzähnen kann der Schneidzahngrat definiert sein als Gerade zwischen den zwei den Schneidzahn im Profil definierende Kanten am Punkt, wo diese in den Radius übergehen.

In einer besonderen Ausführungsform verläuft der Schneidzahngrat und/oder Schneidbackengrat im Wesentlichen parallel zur Längsachse des Werkzeugs. Im Sinne der vorliegenden Erfindung kann ein Schneidzahngrat und/oder Schneidbackengrat im Wesentlichen parallel zur Längsachse des Werkzeugs, wenn er einen Winkel von höchstens 25°, bevorzugt höchstens 10°, besonders bevorzugt höchstens 5° zur Längsachse einschliesst.

In einer besonderen Ausführungform verläuft der Schneidbackengrat parallel zur Längsachse des Werkzeug. Alternativ kann der Schneidbackengrat auch einen Winkel zur Längsachse des Werkzeugs einschliessen. Bevorzugt schliesst der Schneidbackengrat einen Winkel von zwischen 5° und 25° mit der Längsachse ein. In besagter Ausführungsform mit abgewinkelten Schneidbackengrat beschreibt dieser relativ zur Längsachse ein Gefälle oder eine Steigung, ausgehend vom distalen Ende des Werkzeugs; das heisst der Schneidbackengrat beschreibt ein Gefälle, eine Stirnkante höher ist als eine Hinterkante, respektive eine Steigung wenn die Hinterkante höher ist als die Stirnkante. Die Stirnkante ist die vom distalen Ende aus betrachtet nächste Kante der Schneidbacke, die Hinterkante die entgegengesetzte.

In weiter einer besonderen Ausführungsform umfasst das Werkzeug mindestens zwei Schneidbacken, welche wie vorangegangen geschildert einen Schneidbackengrat aufweisen, der einen Winkel ungleich 0 mit der Längsachse einschliesst. Bevorzugt sind diese gegenläufig angeordnet, das heisst eine erste Schneidbacke weist einen Schneidbackengrat mit einem Gefälle auf, während eine zweite Schneidbacke einen Schneidbackengrat mit einer Steigung aufweist. Besonders bevorzugt sind diese auf getrennten Achsen parallel zur Längsachse angeordnet und so ausgestaltet, dass sie wenigstens zum Teil in ihren Rotationsumfängen überlappen, insbesondere im Bereich ihrer relativ niedrigeren Kante überlappen. In diesem Beispiel wäre also die Hinterkante der ersten Schneidbacke von der Stirnkante der zweiten Schneidbacke in ihrem Rotationsumfang überlappt. Mit einer solchen Anordnung kann zum Beispiel sichergestellt werden, dass durch eine sukzessive Bearbeitung eine von einem Schneidzahn geschaffene Gewindenut an ihren Rändern von den beiden genannten Schneidbacken aufgeweitet und entgratet wird.

In einer besonderen Ausführungsform ist das Verhältnis zwischen Schneidzahngrat und Schneidzahnwurzel um zwischen zwei und zehn Mal kleiner als das Verhältnis zwischen Schneidbackengrat und Schneidbackenwurzel. Mit anderen Worten ist bei einem Verhältnis zwischen Schneidzahngrat und Schneidzahnwurzel von 1:10, das heisst, der Schneidzahngrat ist fünf Mal kürzer als die Schneidzahnwurzel, das entsprechende Verhältnis zwischen Schneidbackengrat und Schneidbackenwurzel 1:5, das heisst, der Schneidbackengrat ist fünf Mal kürzer als die Schneidbackenwurzel.

In einer besonderen Ausführungsform ist die Höhe des Schneidzahns grösser als die Höhe der Schneidbacke. Im Sinne der vorliegenden Erfindung kann die Höhe als Distanz einer senkrechten zur Längsachse zwischen Schneidbackenwurzel und Schneidbackengrat verstanden werden.

In einer besonderen Ausführungsform ist das Verhältnis zwischen Schneidzahngrat und Schneidzahnwurzel in einem Bereich von zwischen 1:1.19 und 1:25, bevorzugt von zwischen 1:5 und 1:20, weitere bevorzugt von zwischen 1:10 und 1:15. In dieser besonderen Ausführungsform wäre also ein Schneidzahngrat mit einer Grösse von 1 einer Schneidzahnwurzel mit einer Grösse von 2 bis 25 gegenübergestellt.

In dieser allgemeinen Darstellung der Erfindung sind die Grössenverhältnisse exemplarisch dargestellt und durch ihr Verhältnis zueinander charakterisiert. Zusätzlich kann es sich bei den besagten Grössen um Millimetergrössen von einem hundertstel mm bis 1000 mm handeln. Bevorzugt bewegen sich die Grössen der Schneidzahnwurzel zum Beispiel in einem Bereich von zwischen 0,1 und 10 mm. Die Schneidzahngeräte sind in einem entsprechenden Verhältnis kleiner.

In einer besonderen Ausführungsform ist das erfindungsgemässe Werzeug zur Herstellung von Gewinden in der Grösse M0.3 bis M6 herzustellen.

Besonders bevorzugt ist das Werkzeug ein Gewindewirbler für Gewindegrössen 0.3 bis 6mm, weiter bevorzugt 0.3 bis 3 mm.

In einer besonderen Ausführungsform ist das Verhältnis zwischen Schneidbackengrat und Schneidbackenwurzel in einem Bereich von zwischen 1:1 und 1:2, bevorzug 1: 1,9. In einer weiteren bevorzugten Ausführungsform ist das Verhältnis zwischen Schneidbackengrat und Schneidbackenwurzel in einem Bereich von zwischen 1:1,1 und 1:1,75, besonders weiter bevorzugt von zwischen 1:1,3 und 1:1,5.

In einer besonderen Ausführungsform ist der Schneidzahn so ausgestaltet, dass er bei einer Rotation des Werkzeugs um seine Längsachse einen ersten Bearbeitungsradius definiert. Zusätzlich ist die mindestens eine Schneidbacke so ausgestaltet, dass sie bei einer Rotation des Werkzeugs um seine Längsachse einen zweiten Bearbeitungsradius definiert. Weiter bevorzugt ist der erste Bearbeitungsradius grösser als der zweite Bearbeitungsradius. Bevorzugt handelt es sich bei diesem Bearbeitungsradius um die Distanz einer Senkrechten von der zentralen Längsachse des Werkzeugs bis hin zur am weitesten von dieser Achse entfernten Kante eines Schneidelements. Im Betrieb würde bei einer Rotation des Werkzeugs um seine Längsachse dieser Bearbeitungsradius einen Bearbeitungsumfang definieren, innerhalb von welchem ein Werkstück, welches in diesen Bearbeitungsumfang gerät, materiell abgetragen würden. Somit kann mittels der Schneidzähne Material aus dem Werkstück herausgeschnitten werden und in der Rotationsbewegung des Werkzeugs in einem folgenden Schritt durch die Kontaktierung mit der Schneidbacke auch gleich Material an den Kanten abgetragen werden. Durch die vergleichsweise flachen Schneidbacken entsteht bei dieser zweiten Schneidbewegung kein Grat und die durch den Schneidzahn ausgehobene Nut ist präzise und sauber ausgeschnitten.

In einer besonderen Ausführungsform weisen alle Schneidelement eines Werkzeugs überlappende, aber nicht deckungsgleiche Bearbeitungsumfänge bei einer gedachten Rotation des Werkzeugs um seine eigene Längsachse auf.

In einer besonderen Ausführungsform ist das Werkzeug so ausgestaltet, dass es bei einer Rotation des Werkzeugs um seine Längsachse mindestens zwei Bearbeitungsradien definiert. Besonders bevorzugt werden zwischen 2 und 7, weiter bevorzugt zwischen 2 und 5 Bearbeitungsradien definiert. Ein Bearbeitungsradius kann im Sinne der vorliegenden Erfindung dann definiert sein, wenn ein wie oben definierter Radius in seiner Bewegung keinen deckungsgleichen Umfang, respektive kein deckungsgleiches Volumen eines Schneidzahns definiert und somit eine eigene Bearbeitungsstrecke am Werkstück vorführt. Dies kann einerseits durch unterschiedlich hohe Bearbeitungsradien bewerkstelligt werden, andererseits oder ergänzend auch durch versetzte Bearbeitungsradien. Die geschilderten Bearbeitungsumfänge befinden sich in Ebenen, welche senkrecht zur Längsachse des Werkzeugs stehen. Verschiedene Bearbeitungsradien können also auch entlang der Längsachse des Werkzeugs verschoben auftreten. So kann in einer besonderen Ausführungsform ein Werkzeug mit zwei vom Volumen her identischen Schneidzähnen jedoch zwei Bearbeitungsumfänge definieren, in dem die Bearbeitungsradien der besagten Schneidzähne hinsichtlich einander am Werkzeugkopf verschoben sind.

In einer besonderen Ausführungsform ist das Werkzeug im Wesentlichen dreieckig ausgestaltet. Im Sinne der vorliegenden Erfindung kann als im Wesentlichen dreieckig ausgestaltet verstanden werden, dass ein Querschnitt durch den Werkzeugkopf in einer Ebene, welche senkrecht zur Längsachse des Werkzeugs ist, die Schneidelemente jeweils in einem Abstand von ca. 120° zueinander angeordnet sind. Mit anderen Worten kann der Querschnitt in einer senkrechten zur Längsachse durch den Werkzeugkopf eine im Wesentlichen triskele Form beschrieben werden. In dieser besonderen Ausführungsform sind insgesamt drei Schneidelemente vorgesehen. Mindestens ein Schneidelement ist ein Schneidzahn und mindestens ein Schneidelement ist eine Schneidbacke. Das weitere, dritte Schneidelement kann eine Schneidbacke oder ein Schneidzahn sein. Diese drei Schneidelemente können auf der gleichen Querschnittsebene senkrecht zur Längsachse sein, oder versetzt in Längsrichtung zueinander angeordnet sein.

In einer besonderen Ausführungsform weist der mindestens ein Schneidzahn eine Stirnkante und eine Hinterkante auf. Im Sinne der vorliegenden Erfindung kann die Stirnkante als die Kante des Schneidzahns definiert werden, welche distal, also dem Werkstück zugewandt ist, während die Hinterkante als die Kante des Schneidzahns definiert sein kann, welches proximal, also dem Werkstück abgewandt, ist In einer besonderen Ausführungsform ist nur eine der beiden Kanten des Schneidzahns zum Schneiden ausgestaltet. In einer weiteren besonderen Ausführungsform ist nur die Stirnkante zum Schneiden ausgestaltet. Diese Ausgestaltung zum Schneiden kann sich aus der Werkzeuggeometrie ergeben, oder aber auch durch strukturelle Merkmale der Kante für sich. In einer besonderen Ausführungsform ist eine Schneidkante dann eine solche, wenn sie bei Kontakt mit dem Werkstück zu einer Abtragung von Material führt. Die Geometrie des Werkzeugs kann so ausgestaltet sein, dass bei einer Rotation um die Längsachse stets immer nur eine vordere Kante, also eine Stirnkante, bei einem bestimmten Schneidzahn in das Werkstück eingreift und zu einer Materialabtragung führt, während von einem weiteren Schneidzahn, welcher in die bestehende Nut des ersten Schneidzahns eingreift, stets immer nur die Hinterkante das Material des Werkstücks kontaktiert und zu einer Abtragung führt.

In einer besonderen Ausführungsform umfasst das Werkzeug eine Mehrzahl von Kühlkanälen, welche sich parallel zur Längsachse des Werkzeugs durch den Schaft erstrecken. Solche Kühlkanäle können in der Form einfache Bohrungen durch die Länge des Schafts sein. Ebenfalls denkbar ist, dass die Kühlkanäle erst gebildet werden, wenn ein mehrteiliger Schaft zusammengesteckt wird. So kann der Schaft aus einem Schaftkörper, welcher einen Kern des Schaftes bildet und sich durch die ganze Längsachse erstreckt und einen Schaftmantel umfassen. Dieser Schaftmantel oder der entsprechende Schaftkern kann mit Ausnehmungen ausgestaltet sein, welche im montierten Zustand Kanäle durch den Schaft bilden. Die Kanäle können sich parallel zur Längsachse des Schafts erstrecken. Bevorzugt sind die Kühlkanäle so ausgestaltet, dass sie mindestens eine Öffnung im distalen Bereich, besonders bevorzugt in der Nähe des Werkzeugkopfes aufweisen. Im Betrieb kann eine Kühlflüssigkeit durch die Kühlkanäle in die Bearbeitungszone gelangen und somit sicherstellen, dass ein Überhitzen des Werkzeugkopfes verhindert wird. In einer besonderen Ausführungsform umfasst das Werkzeug je einen Kühlkanal mit je einer Öffnung pro Schneidelement. Bei einem Werkzeug mit drei Schneidelementen zum Beispiel würde mit drei Kühlkanälen gekühlt werden. In einer besonders bevorzugten Ausführungsform sind die Kühlkanäle ebenfalls in einer dreieckigen Querschnittsanordnung zur Längsachse ausgerichtet. Derartig radial um den Mittelpunkt, also die Längsachse angeordnete Kühlkanäle hätten den Vorteil, dass Unwuchteffekte vermieden werden.

In einer besonderen Ausführungsform sind die Öffnungen der Kühlkanäle so angeordnet, dass sie genau zwischen die Schneidelemente zu liegen kommen. In einer dreieckigen, triskelenförmigen Querschnittanordnung wären also die Kühlkanäle in einem Abstand von 120° zueinander angeordnet und in einem Abstand von 60° zu den Schneidelementen angeordnet

In einer besonderen Ausführungsform verjüngt sich der Schaft zum Werkzeugkopf hin, sodass eine Schulter gebildet wird und die besagten Kühlkanäle Öffnungen auf dieser Schulter aufweisen.

In einer weiteren besonderen Ausführungsform sind die Öffnungen dergestalt auf der Schulter angeordnet, dass eine laterale Kühlmittelzuführung ermöglicht wird. Besonders bevorzugt ist es dadurch ermöglicht, dass die Öffnungen dem Verlauf der Schulter folgen und abgeschrägt sind, sodass ein Austritt von Kühlflüssigkeit seitlich erfolgen kann.

In einer besonderen Ausführungsform haben die Kühlöffnungen eine Halbmondform, welche im Wesentlichen dem Verlauf des Werkzeugsprofils folgt. Im Sinne der vorliegenden Erfindung weist eine solche halbmondförmige Kühlöffnung zwei gegenüberliegende Öffnungsradien auf, welche im Wesentlichen dem Verlauf des Schaftumfangs folgen und über einen Übergangsradius miteinander verbunden sind.

In einer besonderen Ausführungsform sind die Kühlöffnungen als Mündungen der Kühlkanäle so ausgestaltet, dass die Kühlmittezufuhr axial verläuft und in einer parallelen zur Längsachse aus den Mündungen erfolgt. Dadurch kann sich bei gleichzeitiger Rotation des Werkzeugs um die eigene Längsachse im Betrieb ein Kühlmittelvorhang entstehen, welche eine optimale Kühlung der materialabtragenden Bearbeitung ermöglicht.

In einer besonderen Ausführungsform sind die Kühlöffnungen als Mündungen koaxial mit Zwischenräumen zwischen den Schneidelementen angeordnet; besonders bevorzugt sind solche Zwischenräume als Ausnehmungen, sogenannte Schneidlücken, ausgestaltet, welche eine Materialabfuhr des materialabtragenden Prozesses ermöglichen.

In einer besonderen Ausführungsform sind die Kühlkanäle und damit verbunden die Kühlöffnungen Radialsymmetrisch um die zentrale Längsachse in einem Winkelabstand angeordnet, besonders bevorzugt in einem Abstand von 120 ° angeordnet.

In einer besonderen Ausführungsform ist jedes Schneidelement auf einer eigenen zu einer Längsachse senkrecht angeordneten Umfangsebene ausgebildet. Alternativ ist jedes Schneidelement auf der gleichen zu der Längsachse senkrecht angeordneten Umfangsebene ausgebildet.

In einer besonderen Ausführungsform weist das Werkzeug eine Mehrzahl an Schneidzähnen auf. Mindestens ein erster Schneidzahn ist gegenüber einem zweiten Schneidzahn entlang der Längsachse versetzt angeordnet, so dass der erste und der zweite Schneidezahn einen überlappenden, aber nicht Deckungsgleichen Rotationsumfang um die Längsachse aufweisen.

In einer besonderen Ausführungsform ist das Werkzeug mit einer abrasionsresistenten Schicht beschichtet. Besonders bevorzugt ist der Werkzeugkopf und/oder mindestens die Schneidelemente mit einer abrasionsresistenten Schicht beschichtet. Geeignete und denkbare abrasionsresistente Beschichtungen sind polykristalline Diamantschichten, polykristalline Bornitrid schichten, Titannitridschichten, Titancarbonitridschichten, Titanaluminiumnitridschichten unter anderem.

In einer besonderen Ausführungsform weisen die Schneidelementen einen bestimmten vordefinierten Abstand von distalen Ende des Werkzeuges auf. In einer besonderen Ausführungsform ist dieser Abstand vom distalen Ende des Werkezuges gemessen bis hin zum distalsten Punkt der Schneidelementwurzel, wo eine Seitenflanke des Schneidelements mit dem distalen Ende des Werkzeuges eine Kante bildet. In einer besonderen Ausführungsform definiert diese Kante einen Winkel. Besonders bevorzugt bildet diese Kante einen Winkel von zwischen 91 und 145°. Das heisst, der Innenwinkel des besagten Schneidelements ist zwischen 89 und 35°, besonders bevorzugt genau 60°.

In einer besonderen Ausführungsform ist der Abstand vom distalen Ende jedes Schneidelements eines Werkzeugs verschieden. Im Beispiel eines dreieckigen Querschnitts folgen die Schneidelemente in ihren Abständen zum distalen Ende aufeinander. Ein erstes Schneidelement ist dem distalen Ende am nächsten. Ein zweites Schneidelement folgt in einem weiteren Abstand und ein drittes Schneidelement ist am weitesten vom distalen Ende entfernt. Als Variante davon ist das zweite Schneidelement in Uhrzeigersinn vom ersten Schneidelement ausgesehen, das vom distalen Ende am weitesten entfernte Schneidelement. In einer besonders bevorzugten Ausführungsform ist diese Reihenfolge gebildet aus Schneidbacke, Schneidzahn und Schneidzahn.

In einer besonderen Ausführungsform sind Schneidelemente, welche sich auf der gleichen Längsebene parallel zur Längsachse befinden voneinander durch eine Kerbe beabstandet.

In einer besonderen Ausführungsform sind die Schneidzähne nicht weiter an den Graten bezahnt. In einer besonderen Ausführungsform sind die Schneidelemente des Werkzeugkopfes zusammengesetzt aus einem Zahn und einer Backe, bevorzugt jeweils auf je einer eigenen parallelen zur zentralen Längsachse des Werkzeugs

In einer besonderen Ausführungsform sind die Schneidelemente des Werkzeugkopfes zusammengesetzt aus einem Zahn und zwei Backen, bevorzugt jeweils auf je einer eigenen parallelen zur zentralen Längsachse des Werkzeugs

In einer besonderen Ausführungsform sind die Schneidelemente des Werkzeugkopfes zusammengesetzt aus zwei Schneidzähnen und einer Schneidbacke, bevorzugt jeweils auf je einer eigenen parallelen zur zentralen Längsachse des Werkzeugs.

In einer besonderen Ausführungsform sind die Schneidelemente am Werkzeugkopf zusammengesetzt aus drei Schneidzähnen und zwei Schneidbacken.

Im Sinne der vorliegenden Anmeldung kann eine parallele zur zentralen Längsachse eine Schneide bilden. Die entsprechenden Schneidelemente befinden sich dann auf einer eigenen entsprechenden parallelen zur zentralen Längsachse, wenn der Radius den sie zur zentralen Längsachse mit ihren entsprechenden Schneidbackengrat oder Schneidzahngrat definieren einen Winkel zum entsprechenden Radius eines anderen Schneidelements einschliesst.

In einer besonderen Ausführungsform sind die Schneidzähne und die Schneidbacken jeweils auf verschiedenen Längsebenen parallel zur Längsachse am Werkzeugkopf angeordnet. Durch diese Anordnung kann erreicht werden, dass eine Schneidbacke im Rotationsmuster stromaufwärts, das heisst, nach dem Eingreifen des Schneidzahns, die entsprechende Abrasion der Nutenkanten des erfolgten Einschnitts durchführt. Selbstverständlich kann auch die Schneidbacke auch vor dem Schneidzahn eingreifen und Material abtragen.

Mit dem erfindungsgemässen Werkzeug ist ein Werkzeug zum materialabtragenden Bearbeiten eines Werkstücks bereitgestellt, welches einfach und vielseitig einsetzbar ist, sowie kostengünstig in der Herstellung. Für einen Fachmann versteht es sich von selbst, dass gewisse Parameter wie die Materialwahl, die Wahl der Beschichtung und die Anordnung der Schneidzähne, respektive Schneidbacken in Anbetracht des gewünschten Formteils und der zu bearbeitenden Materialien gewählt werden kann. Es versteht sich für einen Fachmann ebenfalls, dass sämtliche genannte Ausführungsformen in beliebiger Kombination in einem erfindungsgemäßen Werkzeug verwirklicht sein können, sofern sich diese nicht explizit gegenseitig ausschliessen.

Ein weiterer Aspekt der vorliegenden Erfindung betrifft ein Verfahren zur Herstellung eines Formteils durch materialabtragende Bearbeitung eines Werkstücks mit einem beschriebenen, erfindungsgemässen Werkzeug. Zur Durchführung des Verfahrens, wird das Werkzeug mit dem zu bearbeitenden Werkstück in physischen Kontakt gebracht, sodass die Schneidelemente in das bearbeitende Werkstück eindringen und eine Materialschicht aus dem besagten Werkstück abtragen.

In einer besonderen Ausführungsform wird das Werkzeug dazu um seine Längsachse rotiert. Im Weiteren bevorzugt wird das Werkzeug in einer translatorischen Bewegung auf das Werkstück oder die zu bearbeitende Fläche des Werkstücks bewegt. Bei diesem Prozess kann zunächst das vom distalen Ende des Werkzeugs am wenigstens weit entfernte Schneidelement, bevorzugt Schneidzahn, physischen Kontakt mit dem Werkstück erstellen. Dabei dringt der Schneidzahn, oder die Schneidbacke in das Werkstück ein und trägt eine nutförmige Einkerbung ab. Diese Einkerbung kann je nach nachfolgendem, das heisst, vom distalen Ende am zweitweitesten beabstandete Schneidelement weiter auf geweitet oder umgeformt werden. Besonders bevorzugt wird die Kante der Nut durch die Schneidbacke in diesen Prozess entgratet.

In einer besonderen Ausführungsform trägt eine distale Flankenseite des Schneidzahns zunächst eine Materialschicht aus dem besagten Werkstück ab, insbesondere trägt nur die distale Flankenseite des Schneizahnes die besagte Materialschicht aus dem Werkstück ab. Die entsprechende gegenüberliegende Flanke der somit zu erzeugenden Nut wird von der proximalen Flanke eines vom distalen Ende weiter beabstandeten Schneidzahns gebildet.

In einer besonderen Ausführungsform fährt das Werkzeug eine Helixform aus. Somit kann mit Hilfe des Werkzeuges eine Gewindestruktur an einem Werkstück gefräst werden. In einer besonderen Ausführungsform wird das Gewinde zunächst als Ausnehmung von einem Bohrer vorgeformt. In einem nachfolgenden Schritt wird mit dem erfindungsgemässen Werkzeug die Gewindestruktur an der Innenoberfläche des Bohrzylinders abgetragen und gefräst. Durch die erfindungsgemässe Lösung kann ein gesamtes Gewindeprofil in einem Schritt gefräst werden.

In einer besonderen Ausführungsform ist das Verfahren elektronisch mit einer CNC-Maschine gesteuert.

Ein weiterer Aspekt der vorliegenden Erfindung betrifft Verfahren zur Herstellung eines Formteils durch materialabtragende Bearbeitung eines Werkstücks mit einem Werkzeug, insbesondere mit einem Werkzeug der eingangs geschilderten Art. Das Verfahren umfasst den Schritt des Kontaktierens des Werkzeugs mit dem zu bearbeitenden Werkstück, so dass Schneidelemente des Werkzeugs in das bearbeitende Werkstück eindringen. Ein weiterer Schritt umfasst, dass mindestens ein als Schneidzahn ausgestaltetes Schneidelement eine erste Ausnehmung abträgt, welche im Wesentlichen der Form des besagten Schneidzahns entspricht. In einem weiteren Schritt umfasst das Verfahren, dass mindesten ein als Schneidbacken ausgebildetes Schneidelement eine zweite Ausnehmung abträgt. Beim erfindungsgemässen Verfahren ist die mindestens eine Schneidbacke so ausgestaltet, dass sie die vom profilseitig im Wesentlichen keilförmigen Schneidzahn geschaffenen Keilfuss an seiner breitesten Stelle aufzuweiten vermag.

In einer besonderen Ausführungsform beschreibt das Werkzeug und/oder das Werkstück während der materialabtragenden Bearbeitung eine Helix. Dabei fährt entweder das Werkstück oder das Werkzeug eine spiralförmige Bewegung relativ zum anderen. In einer alternativen Ausführungsform beschreibt sowohl das Werkstück, als auch das Werkzeug eine helikale Bewegung relativ zueinander.

Durch das erfindungsgemässe Verfahren kann zum Besipiel ein Gewindepofil hergestellt werden, welche besonders präzise und sauber ist. Grate werden direkt durch die Schneidbacke an der ersten Schnittkante, welche durch den Schneidzahn gebildet wird abgetragen. Mit der entsprechend fachmännisch eingestellten Steuerung und einer helikalen Führung, kann so ein Gewinde in einem einzigen Bearbeitungsschritt zum Beispiel an einem vorgebohrten Loch (im Falle eines Innengewindes), oder einem Bolzen (im Falle eines Aussengewindes) erzeugt werden. Solche Steuerungen sind dem Fachmann im Grundsatz bekannt, und können situativ an die Geometrie des Werzeugs in Hinblick auf das zu erzeugende Gewinde angepasst werden.

In einer besonderen Ausführungsform bearbeiten Schneidzähne und Schneidbacken, dass Werkstück sukzessive, so dass durch ein erstes bearbeitendes Schneidelement, zum Beispiel einem ersten Schneidzahn, geschaffene erste Ausnehmungskanten von einem sukzessiven Bearbeitungsschritt durch ein anderes Schneidelement, zum Beispiel einer ersten Schneidbacke, weiter abgetragen werden.

In einer besonderen Ausführungsform des Verfahrens trägt ein erster Schneidzahn eine erste Ausnehmung aus einem Werkstück ab, und ein zweiter Schneidzahn eine zweite Ausnehmung aus dem Werkstück ab, welche mit der ersten Ausnehmung überlappt, und eine erste Schneidbacke trägt eine dritte Ausnehmung aus dem Werkstück ab, welche mit der ersten und/oder der zweiten Ausnehmung überlappt.

In einer besonderen Ausführungsform wird eine von einem oder mehreren Schneidzähnen gebildete Gewindenut durch eine Mehrzahl an Schneidbacken welche sukzessive die Nutränder entgratet und aufgeweitet, indem ihre Kanten, welche den kombinierten Bearbeitungsumfängen der Keilfüsse Schneidzähne entsprechen, von mehreren Schneidbacken an den gegenüberliegenden Kantenseiten abgetragen werden.

Ein weiterer Aspekt der vorliegenden Erfindung betrifft ein Formteil, welches mindestens eine helikale Profilkerbung umfasst. In einer besonderen Ausführungsform hat dieses Formteil ein Gewinde, entweder ein Aussen- und/oder ein Innengewinde. Dieses Gewinde zeichnet sich durch eine Nut aus, die erhältlich ist in dem ein Werkstück mit dem erfindungsgemässen Werkzeug materialabtragend bearbeitet wird.

Im Folgenden wird die vorliegende Erfindung nun anhand konkreter Ausführungsbeispiele und Zeichnungen weiter erläutert, ohne auf diese eingeschränkt zu sein. Für einen Fachmann ergeben sich aus diesen Beispielen weitere vorteilhafte Ausführungsformen, welche Ausgestaltungen der erfindungsgemässen Lösung sind.

Die Figuren zeigen schematisch:
- Fig. 1a: ein erfindungsgemässes Werkzeug;
- Fig. 1b: der Werkzeugkopf aus der Fig. 1a vergrössert;
- Fig. 1c: den Werkzeugkopf aus der Fig. 1b perspektivisch;
- Fig. 1d: ein Querschnitt durch die Schnittebene Y - Y aus der Fig. 1b;
- Fig. 1e: ein erfindungsgemässes Werkzeug in Frontalansicht;
- Fig. 1f: ein erstes Schneidelement der Fig. 1a;
- Fig. 1g: ein zweites Schneidelement der Ausführungsform aus der Fig. 1 a;
- Fig. 1h: eine Schneidbacke aus der Ausführungsform der Fig. 1a;
- Fig. 1i: schematisch die mit dem Werkzeug der Fig. 1a erzielbare Schneidkante;
- Fig. 2a: eine alternative Ausführungsform des erfindungsgemässen Werkzeugs;
- Fig. 2b: der Werkzeugkopf der Ausführungsform von Fig. 2a;
- Fig. 2c: verschiedene Schnittebenen durch den Werkzeugkopf der Fig. 2a;
- Fig. 2d: ein Querschnitt durch die Schnittebene Y - Y der Fig. 2b;
- Fig. 2f: schematisch die Schneidelemente der Ausführungsform der Fig. 2a in Relation an einer Senkrechten S zur Längsachse;
- Fig. 2g: schematisch die Überlappungen der Schneidelemente der Fig. 2a;
- Fig. 2h: schematisch der Werkzeugkopf der Fig. 2a in perspektivischer Ansicht;
- Fig. 2i: Längsquerschnitt durch das Werkzeug aus der Fig. 2a;
- Fig. 3a: eine weitere alternative Ausführungsform eines erfindungsgemässen Werkzeugs;
- Fig. 3b: der Werkzeugkopf der in der Fig. 3a gezeigten Ausführungsform;
- Fig. 3c: perspektivische Ansicht des Werkzeugkopfes;
- Fig. 3d: schematisch die Schneidelemente der Ausführungsform der Fig. 3a in Relation an einer Reihe von Senkrechten zur Längsachse;
- Fig. 3e: schematisch eine Überlappung der Schneidelemente des Werkzeugs der Fig. 3a.

Sofern nicht explizit anders erwähnt, werden die analogen Elemente jeweils mit dem gleichen Bezugszeichen in verschiedenen Figuren dargestellt.

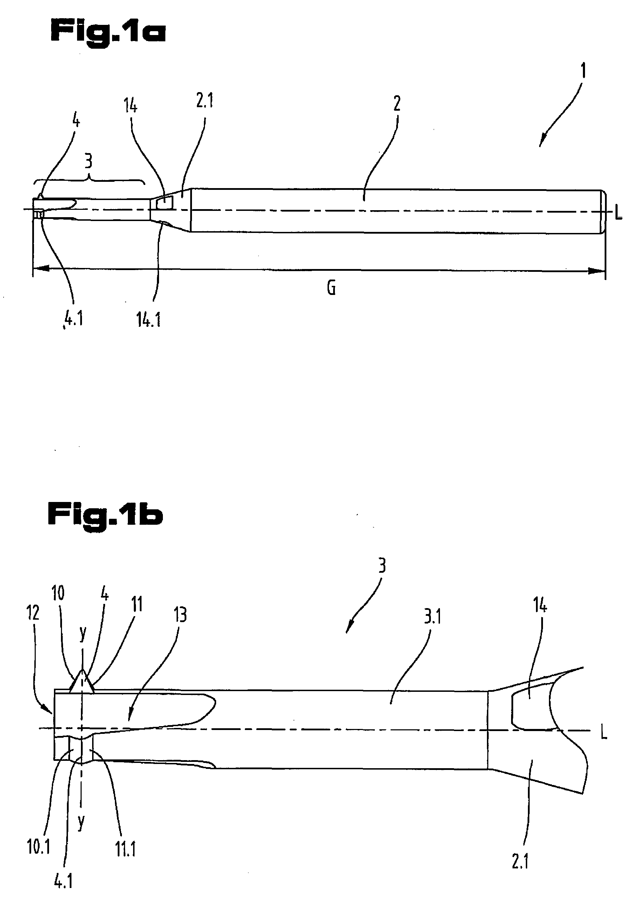

Die Figur 1a zeigt exemplarisch eine Werkzeug 1 gemäss vorliegender Erfindung. Das Werkzeug lässt sich grob in zwei Bereiche 2,3 unterteilen, einen Schaft 2 und einen Werkzeugkopf 3. Das distale Ende befindet sich im Bereich des Werkzeugkopfes 3 und wird vom Weitesten Punkt in Längsrichtung gebildet, während das proximale Ende sich auf der genau gegenüberliegenden Seite am Schaft 2 befindet. In der Figur 1a ist ebenfalls eine Längsachse L gezeigt, welche durch den Mittelpunkt des Umfangquerschnitts des Schaftes 2 verläuft und gleichzeitig die Rotationsachse des Werkzeuges 1 im Betrieb bildet. Das in der Figur 1a gezeigte Werkzeug 1 kann zum Beispiel eingesetzt werden, um eine Profilnut an einer vorgeborten Öffnung, oder ein Aussengewinde an einem Stift zu fräsen, in dem das Werkzeug 1 um seine Längsachse L rotiert wird und von einem Antrieb in einer helikalen Bewegung translatorisch entlang eines Zylindermantels der besagten Bohrung oder des besagten Stiftes geführt wird. Die materialabtragende Bearbeitung findet am Werkzeugkopf 3 statt und in der gezeigten Darstellung der Figur 1a sind beim insgesamt im Querschnitt dreieckigen Werkzeugkopf zwei Schneidelemente 4,4.1 sichtbar, von denen beides Schneidzähne 4,4.1 sind. Das Werkzeug 1 besitzt ebenfalls eine Schneidbacke, welche jedoch in der gezeigten Darstellung nicht sichtbar ist. Im vorliegenden Beispiel ist das Werkzeug mehrteilig ausgestaltet. Der Werkzeugkopf 3 ist einstückig und besteht aus einem besonders harten Material, welches von einem Fachmann so ausgewählt wird, dass es mindestens härter als das zu bearbeitende Material des Werkstücks ist. Der Schaft 2 kann aus einem vergleichsweise günstigeren oder leichteren Material gefertigt sein. Im vorliegenden Beispiel wurde der Werkzeugkopf 3 über eine Schulter 2.1 mit dem Schaft 2 verbunden. Die Schulter 2.1 stellt eine Verjüngung des Schaftes 2 zum Werkzeugkopf 3 dar. Im vorliegenden Beispiel wurde der Werkzeugkopf 3 mit dem Schaft 2 über einen Bajonettverschluss verrastet. Grundsätzlich sind aber alle Arten der form- oder kraftschlüssigen Verbindung bei einem solchen zweiteiligen Werkzeug 1 denkbar. Es ist auch möglich das gesamte gezeigte Werkzeug 1 als einstückiges Werkzeug herzustellen. Ein einstückiges Werkzeug hätte den Vorteil der erhöhten Stabilität. Bei einem zwei oder mehrteiligen Werkzeug 1 ist die Wartung einfacher und die Erzeugung der Kühlkanäle (in der Figur 1a nicht gezeigt) einfacher. Das Beispielwerkzeug 1 ist aus Stahl und weist eine Gesamtlänge G von zwischen 50 und 60 mm. Der Querschnittsdurchmesser des Schaftes 2 beträgt ca. 4 bis 5 mm. Natürlich sind die Dimensionen Werkzeuges 1 vor allem durch die beabsichtigte Bearbeitung bestimmt. Die angegebenen Grössen sind rein exemplarisch und können variieren. Die Bereiche stellen nicht eine Ungenauigkeit dar, sondern geben für das exemplarische Werkzeug eine gute Basis um bestimmte normierte Gewinde erzeugen zu können. In einer besonders konkreten Ausführungsform des Werkzeuges 1 weist das Werkzeug eine Gesamtlänge von 55 mm und ein Durchmesser von 4 mm auf (Schaftdurchmesser).

In der Fig. 1a ebenso ersichtlich sind zwei Kühlöffnungen, welche aus der Schulter 2.1 münden und radial um die Längsachse L angeordnet sind. Die Kühlöffnungen 14,14.1 münden in Kühlgänge (nicht gezeigt), welche parallel zur Längsachse L verlaufen. Im Betrieb wird durch die Kühlöffnungen 14, 14.1 ein Strahl Kühlmittel zum Werkzeugkopf parallel zur Längsachse gespritzt. Durch die Rotation des Werkzeugs 1 um die Längsachse L entsteht so ein radialer Kühlmittelvorhang, welcher den materialabtragenden Prozess optimal kühlt.

Figur 1b zeigt eine vergrösserte Darstellung des Werkzeugkopfes 3 des Werkzeuges 1 aus der Figur 1a. Der Werkzeugkopf 3 beginnt mit dem Abschluss der Verjüngung des Schaftes in Form einer Schulter 2.1 in einem Werkzeughals 3.1. Ebenfalls ersichtlich ist der Verlauf der Längsachse L durch den Werkzeugkopf 3. Am distalen Ende des Werkzeugkopfes 3 befindet sich eine distale Kopffläche 12. Die Schneidelemente 4,4.1 erstrecken sich keilförmig vom Werkzeugkopf weg. Zwischen den Schneidelementen 4,4.1 befindet sich eine Schneidlücke 13, welche die Materialabtragung vereinfacht Im vorliegenden Beispiel dringen die keilförmigen Schneidzähne 4,4.1 in die Oberfläche des Werkstückes und schälen eine keilförmige Nut aus diesem heraus, wobei die Späne über die Schneidlücke 13 abgetragen werden. Im vorliegenden Beispiel entspricht der Werkzeughals 3.1 in ungefähr der Tiefe des zu erzeugend Gewindes. Ebenfalls ersichtlich ist beim oberen Schneidzahn 4 (ausgehend von der Orientierung in der Figur) eine Stirnkante 10 und eine Hinterkante 11 des Schneidzahns 4. Der analoge, um 120° in Uhrzeigersinn zum ersten Schneidzahn 4 versetzte zweite Schneidzahn 4.1 weist ebenfalls eine Stirnkante 10.1 und eine entsprechende Hinterkante 11.1 auf. Im vorliegenden Beispielwerkzeug ist die Anordnung der Schneidzähne 4,4.1 auf der gleichen Ebene senkrecht zur Längsachse. Ebenso sind die Schneidzähne 4,4.1 gleich gross. Das heisst, die von den Schneidzähnen 4,4.1 bei einer stationären Rotation des Werkzeugs ausgefräste Nut ist deckungsgleich.

Die Kühlöffnung 14 ist in diesem Beispiel im Wesentlichen koaxial mit der Schneidlücke 13 angeordnet.

Ausgehenden von den Beispielgrössen der Figur 1a ist der Werkzeugkopf 3 zwischen 10 -12 mm lang. Üblich sind für Gewindegrössen in der Grösse M0.3-M6 Werkzeugköpfe von 0.6 bis 25mm Länge, wobei die endgültige Ausgestaltung vom Fachmann anhand der Maschinenanforderungen und der zu erzeugenden Gewindegrösse bestimmbar ist.

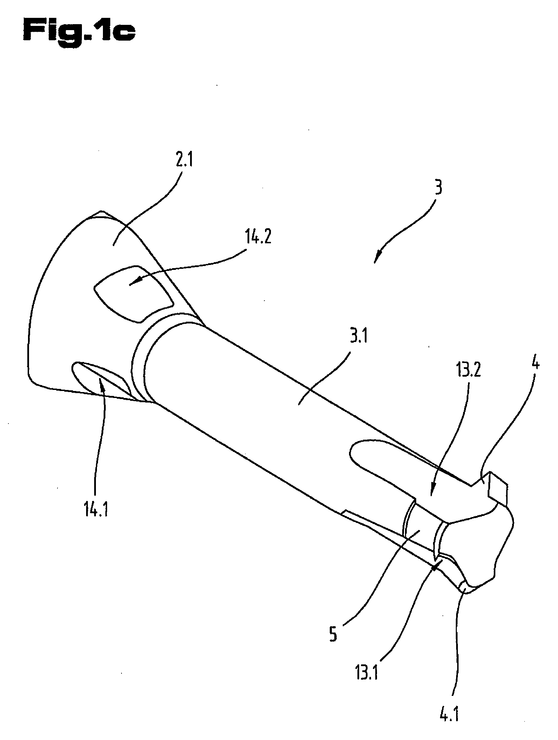

Die Figur 1c zeigt den Werkzeugkopf 3 der Figur 1b in perspektivischer Frontansicht vom distalen Ende aus. In dieser Perspektive ist ausgehend von der distalen Endfläche 12 die Anordnung der Schneidelemente 4,4.1 und 5 besonders deutlich ersichtlich. Die Schneidelemente 4, 4.1, 5 sind in einer kreisförmigen Anordnung um den Mittelpunkt des Werkzeugs um 120° voneinander beabstandet angeordnet. Die gezeigte Perspektive zeigt die Schneidbacke 5, und zwei gegenüberliegende Schneidzähne 4,4.1 zwischen der Schneidbacke 5 und dem ersten Schneidzahn 4 befindet sich die Schneidlücke 13.2. Verbunden sind die Schneidelemente 4,4.1,5 mit dem sich verjüngenden distalen Schaftende 2.1 über einen Werkzeugkopfhals 3.1. Ebenfalls aus dieser perspektivischen Ansicht gut ersichtlich ist die Kühlmittelöffnung 14.2, welche sich lateral am sich verjüngenden distalen Schaftende 2.1 öffnet. Sie ist in der gleichen Längsebene angeordnet wie die Schneidzahnlücke 13.2, was im Betrieb zu einer besseren Verteilung des Kühlmittels führen kann.Analog ist eine weitere Kühlöffnung 14.1 koaxial mit einer weiteren Schneidlücke 13.2 angeordnet. Obwohl sich die Kühlöffnungen 13.1, 13.2 lateral auf der Schulter 2.1 öffnen, führt die Mündung zu einer axialen Kühlmittelzufuhr im Betrieb.

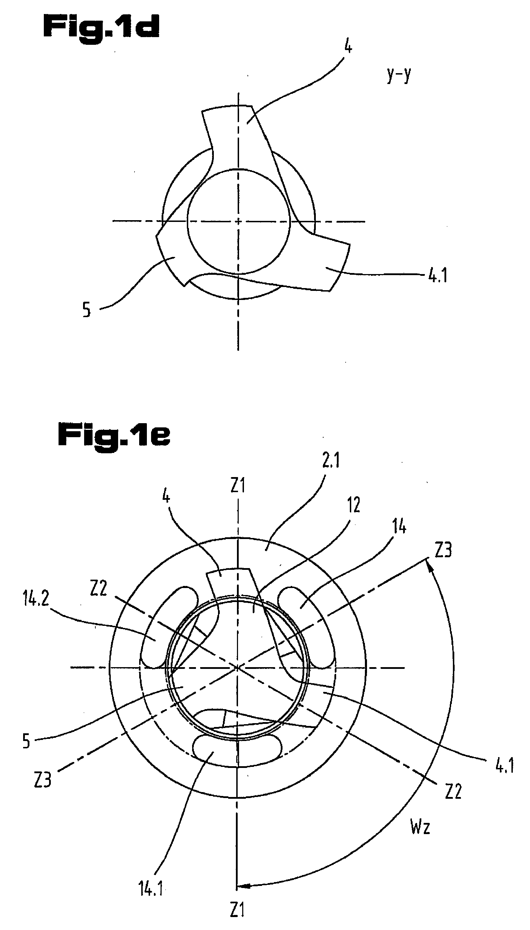

Die Figur 1d zeigt schematisch den Querschnitt in der Ebene Y - Y durch die Schneidelemente des Werkzeugkopfes 3 aus der Figur 1b. Aus dieser Figur geht besonders deutlich die radiale Anordnung der Schneidelemente 4, 4.1, 5 um die den Mittelpunkt (die Längsachse L) und die daraus resultierende, im Wesentlichen triskele Anordnung der drei Schneidelemente 4.1, 4.2 und 5 hervor. Die Mittelpunkte der Schneidelemente sind in etwa 120° voneinander beabstandet.

Die Figur 1e zeigt analog eine Frontalansicht auf den Werkzeugkopf und verschiedene Schnittebenen Z1-Z1,-Z2-Z2 und Z3-Z3, welche im Folgenden die einzelnen Schneidelemente 4, 4.1, 5 des Werkzeuges der Figur 1a näher erläutern.

In der Frontalansicht der Fig. 1e ist das distale Ende des Werkzeugkopfes durch die distale Kopffläche 12 gebildet. Von dieser ausgehend, erstecken sich in distaler Richtung drei Schneidelemente 4, 4.1, 5, von denen zwei als Schneidzähne 4, 4.1 und eines als Schneidbacke 5 ausgebildet sind. An der Schulter 2.1 sind radial um den Mittelpunkt L, welcher sich auf der Längsachse L befindet, drei Kühlöffnungen 14, 14.1, 14.2 angeordnet. Diese sind um einen Winkel Wz von 120 Grad voneinander beabstandet. Die Schneidelemente 4, 4.1, 5 erstrecken sich vom Werkzeugkopf in der Mitte dieser Winkel, jeweils also um 120 Grad voneinander beabstandet, respektive um 60 Grad von den Kühlöffnungen beabstandet, nach aussen, so dass eine im Wesentlichen triskele Form des Werkzeugkopfes in Frontanansicht besteht.

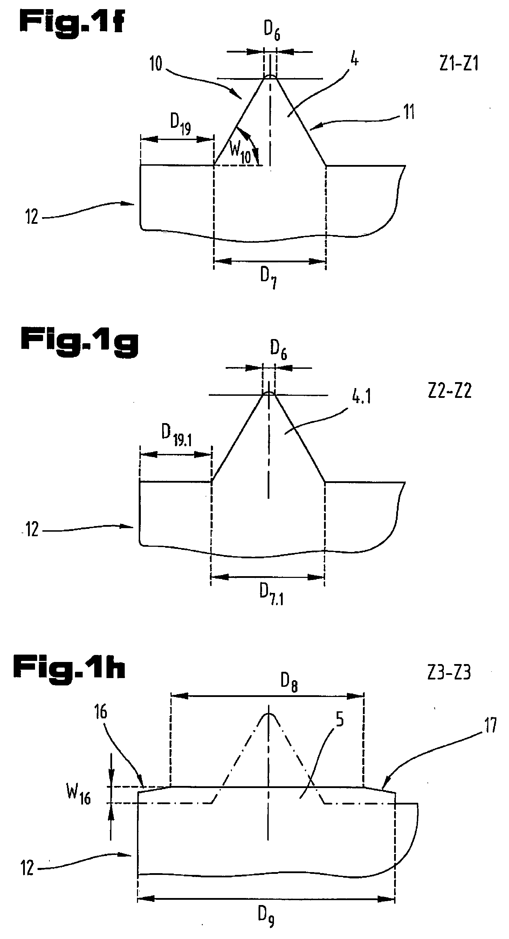

In der Figur 1f ist die Schnittebene Z1-Z1 durch einen Schneidzahn 4 gezeigt Der Schneidzahn hat eine im wesentlichen keilförmige Form. Dabei wird der Keil von zwei Flanken, einer Stirnflanke 10 und Hinterflanke 11 gebildet und endet in einer runden Spitze. Der Schneidzahngrat bemisst sich als Distanz der beiden Endpunkte der Flanken 10, 11. Das heisst der Grat wird als Distanz in diesem Beispiel dort bemessen, wo die Stirnflanke 10 und die Hinterflanke 11 in den Radius der runden Spitze übergehen. Dieser Schneidzahngrat hat eine Länge D₆. Die Stirnflanke 10 erstreckt sich vom distalen Ende des Werkzeugkopfes in einem bestimmten Winkel W₁₀ zum Schneidzahngrat hin. Im vorliegenden Beispiel ist der Winkel W₁₀ ein Winkel von 60°. Die Kanten, die gebildet werden, wenn der Kegel auf den Werkzeughals treffen, bilden die Punkte die massgeblich sind zur Bemessung der Breite der Schneidzahnwurzel D₇. Im vorliegenden Beispiel beginnt sich die Stirnkante 10 nach einem Abstand D₁₉ von ungefähr 0,4 mm von der distalen Fläche 12 nach oben zu erstrecken, in einem Winkel W₁₀ von 60° zu einer Parallelen der Längsachse, und mündet in einem Schneidzahngrat mit einer Breite D₆ von 0,05 mm. Die zum Schneidzahngrat D6 parallel verlaufende Schneidzahnwurzel D₇ in diesem Beispiel hat eine Breite von 0,6 mm. In diesem konkreten Beispiel hat dieser Schneidzahn 4 ein Verhältnis zwischen Schneidzahngrat und Schneidzahnwurzel von 1 zu 12.

Analog dazu ist der zweite Schneidzahn 4.1 in der Schnittebene Z2-Z2 in der Figur 1g dargestellt. Dieser Schneidzahn hat die gleichen Dimensionen wie der Schneidzahn 4 aus der Figur 1f. Die beiden Schneidzähne sind somit im Wesentlichen deckungsgleich. Der Abstand D_{19.1} vom distalen Ende bis zur stirnseitigen Schneidzahnwurzel beträgt gleich viel wie der analoge Abstand D₁₉ der Fig. 1f, also ungefähr 0,4 mm von der distalen Endfläche 12.

In der Figur 1h ist die Schneidbacke 5 des entsprechenden Werkzeuges 1 in der Schnittebene Z3-Z3 gezeigt. Die Schneidbacke 5 wird ebenfalls durch eine Stirnkante 16 und einer Hinterkante 17 gebildet, welche einen Winkel W_{w16} von 10° zu einer Parallelen zur Längsachse einschliessen. Die Kanten 16,17 bilden zwischen sich einen Schneidbackengrat mit einer Breite D₈. Die Anfangskanten der Kanten 16,17 bilden durch ihren Abstand die Schneidbackenwurzel mit einer Schneidbackenwurzelbreite D₉. Im vorliegenden Beispiel ist die Breite der Schneidbackenwurzel D₉ 1,4 mm. Die Breite des Schneidbackengrats D₈ ist 1,05 mm. Das Verhältnis zwischen Schneidbackengrat und Schneidbackenwurzel beträgt imvorliegenden Beispiel 1 zu ungefähr 1,3 (1,33 periodisch).

Somit ist das Verhältnis bei den Schneidzähnen 4, 4.1 in Vergleich zu den Schneidbacken 5 in der Ausführungsform des Beispiels aus der Figur 1a ungefähr zehnmal kleiner bei den Schneidzähnen als bei den Schneidbacken (1 zu 12, vs. 1 zu 1,3).

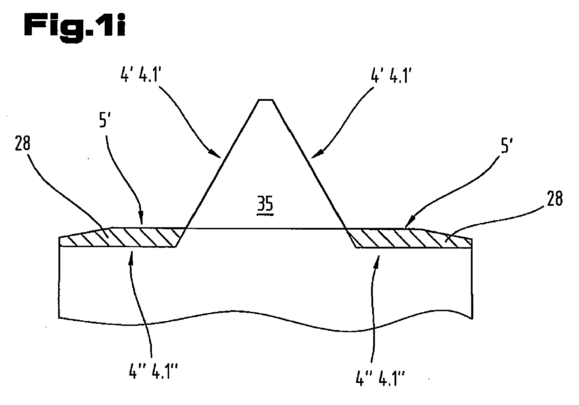

Die Figur 1i zeigt exemplarisch eine in einer statischen Rotation um die Längsachse durch das Werkzeug aus der Figur 1a ausgefräste Nut (fett durchgezogene Linie). Sukzessive dringen die Bearbeitungswerkzeuge 4,4.1 und 5 in das Material ein und bilden somit (schematisch) eine Gewindekerbe 35 mit der Oberfläche 5',4',4',4.1'.

Dabei wird in einem ersten Bearbeitungsschritt von den deckungsgleich rotierenden Schneidzähnen eine Nut mit einer ersten Oberfläche 4"/4.1", 4'/4.1' ausgehoben. In einem zweiten Bearbeitungsschritt wird durch die Schneidbacke von einem Rand der Nut ein Überschuss 28 abgeschnitten. Dadurch wird die Gewindenut 35 geweitet und es entsteht eine saubere Schnittkante an der Gewindenut mit einer neuen Oberfläche 5'.

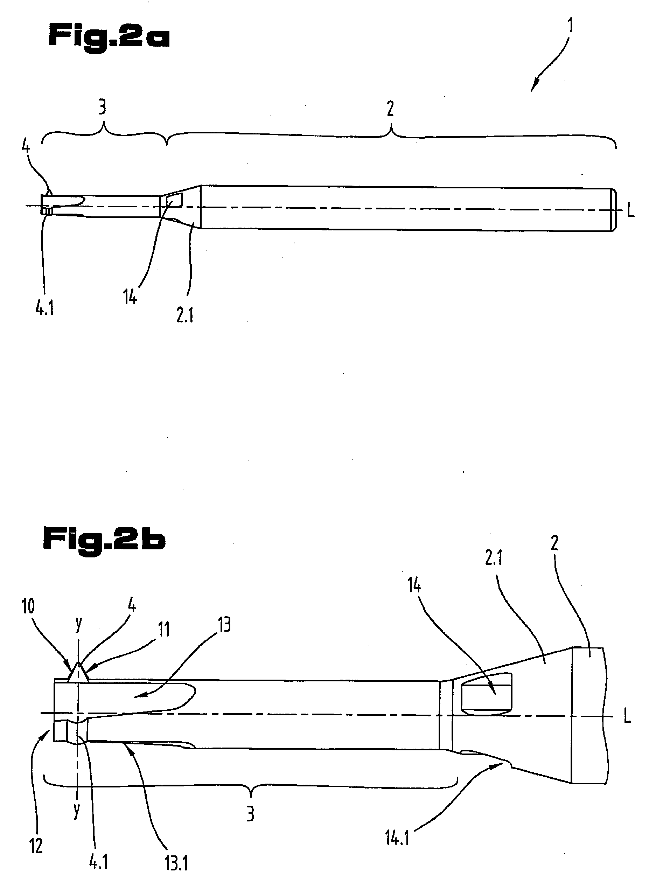

Eine alternative Ausführungsform eines erfindungsgemässen Werkzeuges 1 wird in der Figur 2a dargestellt. Auch dieses Werkzeug ist ein sich in einer Längsrichtung L erstreckendes Werkzeug 1 aus einem Schaft 2 und einem Werkzeugkopf 3. Der Schaft 2 verjüngt sich in einer Schulter 2.1 zum Werkzeugkopf 3 hin und weist auf dieser Schulter 2.1 Öffnungen 14 für die Zufuhr von Kühlmittel während des Bearbeitungsprozesses auf. Der Werkzeugkopf endet an seinem distalen Ende in einer Reihe von Schneidelementen 4, 4.1, 5 (die Schneidbacke, Nr. 5 in dieser Perspektive nicht ersichtlich). Die CH 706 934 (Mikron Tool SA Agno, CH) beschreibt die Anordnung von Kühlkanälen an einem Fräswerkzeug, bei dem eine Austrittsöffnung eines Fluidkanals genau unterhalb einer Schaftschulter angeordnet ist.

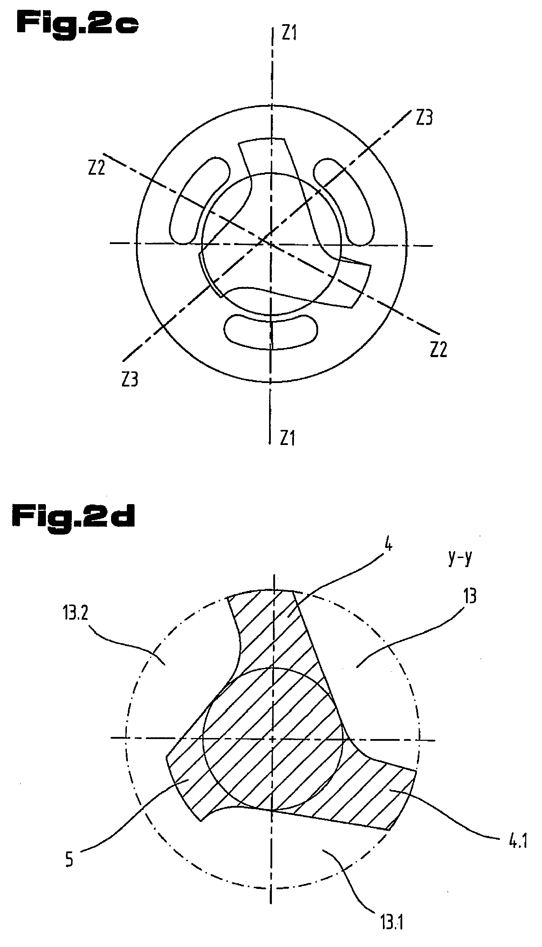

Die Figur 2b zeigt entsprechend den Werkzeugkopf 3 in einer vergrösserten Darstellung, wobei der Schaft 2 in die Schulter 2.1 mündet, auf der sich die Kühlöffnungen 14,14.1 befinden. Über einen Werkzeughals 3.1 endet der Werkzeugkopf 3 an seinem distalen Ende mit einer distalen Endfläche 12 und den Schneidelementen 4,4.1, wobei ein erstes Schneidelement 4 eine Stirnkante 10 und eine Hinterkante 11 aufweist. Die Schnittebene Y - Y wird anschliessend in der Figur 2d näher erläutert. Auch dieses Werkzeug hat eine im Wesentlichen triskele Grundform und einen Bearbeitungsradius, wobei sich die Schneidelemente in einem Winkel von ungefähr 120° im Uhrzeigersinn voneinander beabstandet um einen Mittelpunkt auf der Längsachse anordnen. Der erste Schneidzahn 4 ist gefolgt von einer Schneidzahnlücke 13 und einem zweiten Schneidzahn 4.1, wiederum gefolgt von einer Schneidzahnlücke 13.1 und der Schneidbacke 5, gefolgt von einer weiteren Schneidzahnlücke 13.2.

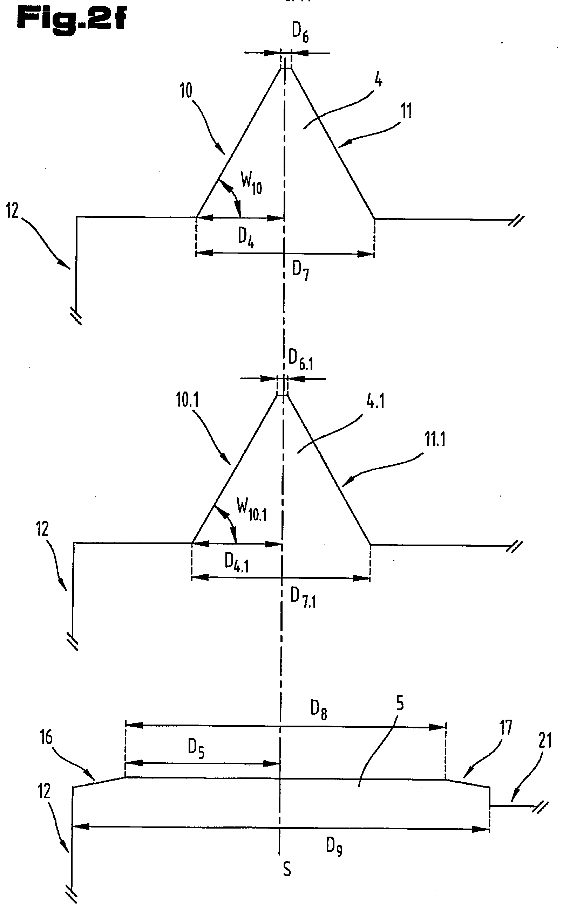

Eine Aufsicht davon ist in der Figur 2c gezeigt, welche eine ebenfalls wesentliche dreieckige Anordnung der Kühlöffnungen 14,14.1 und 14.2 an der Schaftverjüngung 2.1 zeigt. In der Figur 2c sind auch die entsprechenden Schnittebenen durch die Schneidelemente Z1 - Z1, Z2-Z2 und Z3 - Z3 dargestellt, welche im Anschluss in der Fig. 2f einen Versatz der Schneidelemente näher illustrieren soll.

Die Fig. 2d zeigt die erwähnte Schnittebene Y - Y aus der Fig. 2b. Gut ersichtlich sind die im Wesentlichen triskele Anorndung der Schneidelemente 4, 4.1, 5 und die zwischen den Schneidelementen 4, 4.1, 5 angeordneten Schneidlücken 13, 13.1, 13.2.

Zur besseren Darstellung der versetzen Anordnung der Schneidelemente 4, 4.1, 5 im Unterschied zur Ausführungsform der Figur 1a, sind in der Fig. 2f die Schneidelemente relativ zu einer Senkrechten S zur Längsachse und zueinander dargestellt. Zu Anschauungszwecken sind die insbesondere die Schneidzähne 4,4.1 übereinander dargestellt. Die Senkrechte S wurde so gewählt, dass siedurch den Mittelpunkt der Breite der Schneidbacke 5 verläuft.

Die Versetzung des distalen Wurzelansatzes der Schneidelemente 4, 4.1, 5 in Relation zur Senkrechten S wird als Offset D₄, D_{4.1} in der Figur 2f dargestellt. Dabei ist der erste Offset D₄ des ersten Schneidzahns 4 kleiner als der zweite Offset D_{4.1} des zweiten Schneidzahns 4.1. Im Betrieb hat dies zur Folge, dass vom ersten Schneidzahn eine Gewindenut mit einer ersten Breite ausgeschnitten wird, während vom zweiten Schneidzahn die Gewindenut aufgeweitet wird und eine zweite Breite entsteht. Vom ersten Schneidzahn 4 ist also lediglich die Stirnkante 10 und ein entsprechender Schneidzahngratsabschnitt formgebend für die resultierende Nut, während vom zweiten Schneidzahn 4.1, die Hinterkante 11.1 und der entsprechende Schneidzahngratabschnitt formgebend sind.

Alternativ oder Ergänzend kann eine Aufweitung der Gewindenut auch über eine Verschiebung des Werkzeugs, so dass ein sukzessives Bearbeiten des Werkstücks mit einem ersten und einem zweiten Schneidzahn zu einer Aufweitung der besagten Nut führt.

Die Schneidzähne werden durch ihre entsprechenden Seitenkanten 10,11,10.1,11.1 gebildet, welche sich in Winkeln W₁₀, W_{10.1} von einer parallelen zur Längsachse abspreizen. Die Winkel W10 und W10.1 sind in diesem Beispiel mit 60° gezeigt. Die letztendliche Form des Schneidzahns und somit die Winkel der Schneidzahnkanten sind selbstverständlich von der zu erzielenden Gewindeform abhängig und können vom Fachmann im Rahmen der vorliegenden Erfindung angepasst werden. Der Schneidzahngrat verläuft in dieser Ausführungsform als Gerade parallel zur Längsachse.

Der erste Schneidzahn 4 hat ein Verhältnis zwischen Schneidzahngrat D₆ und Schneidzahnwurzel D₇ von 1 zu 19. Er weist einen Offset D₄ von der Senkrechten auf, der kleiner ist als ein zweiter Offset D_{4.1} des zweiten Schneidzahns 4.1 von der Senkrechten S. Der zweite Schneidzahn hat ein Verhältnis zwischen Schneidzahngrat D_{6.1} zu Schneidzahnwurzel D_{7.1} von 1 zu 19.

Bei der Schneidbacke 5 verläuft die Senkrechte S durch die Mitte der Breite der Schneidzahnbacke D₉ und des entsprechenden Schneidbackengrates D₈. Ein Schneibacken-Offset D₅ entspricht der Hälfte der Distanz Ds, respektive D₉. Das Verhältnis zwischen Schneidbackengrat D₈ und Schneidbackenwurzel D₉ beträgt ungefähr 1 zu 1,35. Wie im vorangehenden Beispiel sind diese Verhältnisse und Masse lediglich exemplarisch angegeben und die realen Masse einer konkreten Ausführungsform können durch die gewünschte Gewindegrösse von einem Fachmann situativ bestimmt und ausgewählt werden.

Die Schneidbacke 5 besitzt eine Stirnkante 16 und eine Hinterkante 17, welche in einer Kerbe 21 endet, die sich in den Werkzeughals (nicht gezeigt) erstreckt.

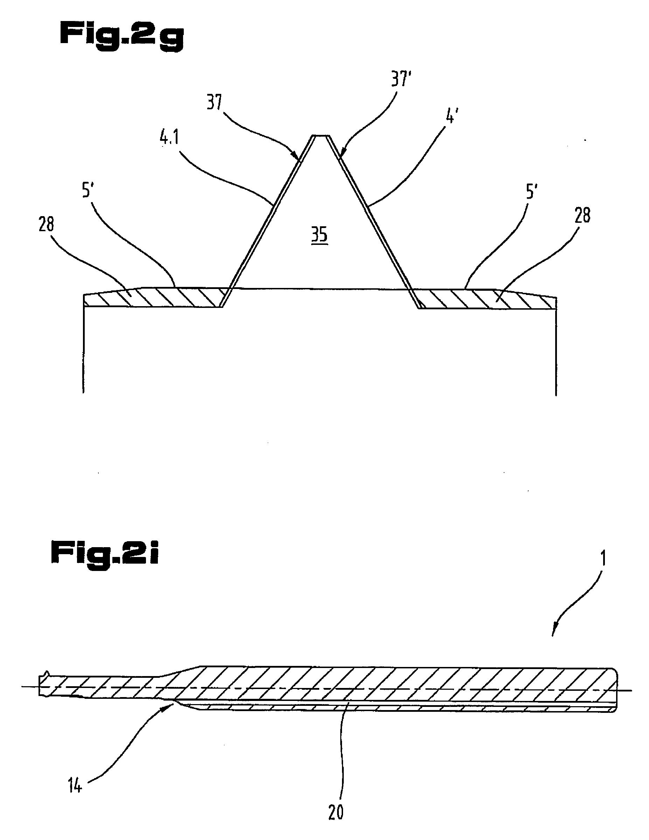

Die Folge dieser Anordnung ist an einer schematischen Nut in der Figur 2g illustriert. Der erste Schneidzahn 4 mit dem Offset in proximaler Richtung hinsichtlich der Senkrechten S bildet die Kante 4'. Die Versetzung der Schneidzähne 4, 4.1 zueinander führt dazu, dass die gesamte Ausnehmung 35 der Nut durch die Überlappung der beiden Schneidzähne und zusätzlich den Versätzen 37, 37' auf beiden Seiten gebildet wird. So wird ein erster Versatz 37 von der Stirnkante des zweiten Schneidzahns und ein zweiter Versatz 37' von der Hinterkante des ersten Schneidzahns geformt.

Um eine Nut zu erhalten, wie sie in der Fig. 2g gezeigt ist, werden die Schneidzähne also insgesamt so ausgestaltet, dass sie schmäler sind als die Nut. Durch den Offset der Schneidzähne hinsichtlich der Senkrechten wird ein zusätzlicher Versatz abgetragen und die Schneidzähne beschreiben verschiedene Rotationsumfänge. Die Stirnseitige Nutflanke wird durch den zweiten Schneidzahn 4.1 gebildet, während die proximale Nutflanke 4' durch den ersten Schneidzahn gebildet wird.

Die Nut wird weiter durch die Schneidbacke(n) an ihren Seitenrändern geweitet, indem diese den Überschuss 28 abtragen.

Die beschriebene Bearbeitung erfolgt in der Rotation des Werkzeugs sukzessive. In der Anwendung gestaltet sich dies allerdings komplexer, da in der Regel in der Erzeugung eines Gewindes das Werkzeug helikal in Gewinderichtung bewegt wird. Durch das erfindungsgemässe Werkzeug mit einem einzigen Arbeitsschritt geschnitten und entgratet werden. Die resultierenden Profile sind besonders exakt und sind im Wesentlichen gratfrei.

Der Beschrieb der Arbeitsabfolge und die Nummerierung der einzelnen Schneidelemente erfolgt in dieser Anmeldung zur besseren Veranschaulichung. Im Betrieb spielt die Reihenfolge der Bearbeitung indes keine Rolle und lässt sich beim schnell rotierenden Werkzeug ohnehin nur sehr umständlich steuern.

Analog zur Ausführungform der Fig 1, wird auch in diesem Beispiel durch die Schneidbacke ein Überschuss 28 abgeschnitten, so dass eine Aufweitung der Nut geschieht bei gleichzeitiger Entgratung der Schnittkante welche durch die Schneidezähne erzeugt wird. Auch dieser Prozess kann sukzessive erfolgen.

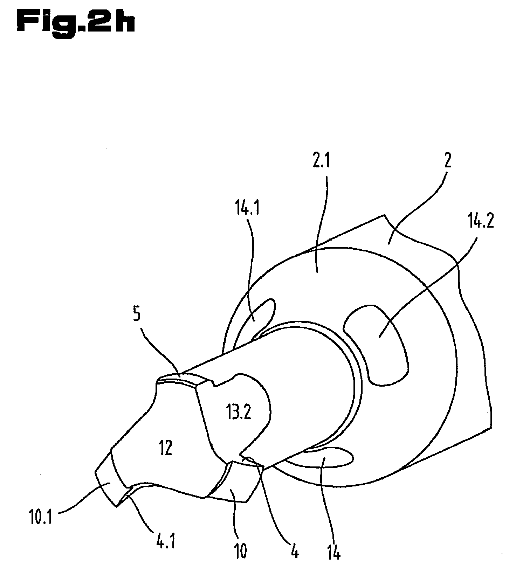

Die Fig. 2h zeigt ein Werkzeugkopf aus der Ausführungsform der Fig. 2a in perspektivischer Ansicht, wobei die drei Schneidelemente 4.1,4 und 5 in ihrer triskelischen Anordnung besonders gut sichtbar sind. Der Schneidzahn 4 und die Schneidbacke 5 schliessen im Radius eine Schneidzahnlücke 13.2 ein, welche in Längsrichtung auf der gleichen Ebene wie eine im Wesentlichen halbmondförmige Kühlöffnung 14.2 liegt. Dadurch kann im Prozesskühlmittel optimal an den Bearbeitungsort gelangen und die Spanabtragung kann erleichtert ablaufen. An der Schulter 2.1 des Schaftes 2 sind ebenfalls die weiteren mit den entsprechenden Schneidzahnlücken angeordneten Kühlöffnungen 14, 14.1 angeordnet. Im Uhrzeigersinn sind die Schneidelemente 5, 4, 4.1, die Schneidbacke 5, der Schneidzahn 4 mit seiner Stirnkante 10 und der Schneidzahn 4,1 mit seiner Stirnkante 10.1 sichtbar.

Für die Bearbeitung besonders harter Materialien kann der Werkzeugkopf oder mindestens die Schneidelemente zusätzlich mit einer besonders abrasionsresistenten Beschichtung versehen sein. Im konkreten Beispiel besteht der Schneidzahnkopf aus Hartmetall und wurde mit einer Titannitridschicht versehen. Diese keramische Beschichtung ist besonders hart und korrosionsbeständig und resistent gegen Verschleiss.

Mit der erfindungsgemässen Lösung lassen sich auch komplexe Gewinde mit verschiedenen Gewindegrössen, welche parallel verlaufen, herstellen.

Die Figur 2i zeigt im Längsquerschnitt durch das Werkzeug aus der Figur 2a die Anordnung der Kühlkanäle 20 an einem konkreten Beispiel. Der Kühlkanal 20 erstreckt sich vom proximalen Ende des Werkzeugs 1 bis zur Verjüngung des Schaftes und mündet dort lateral in eine Kühlmittelöffnung 14.

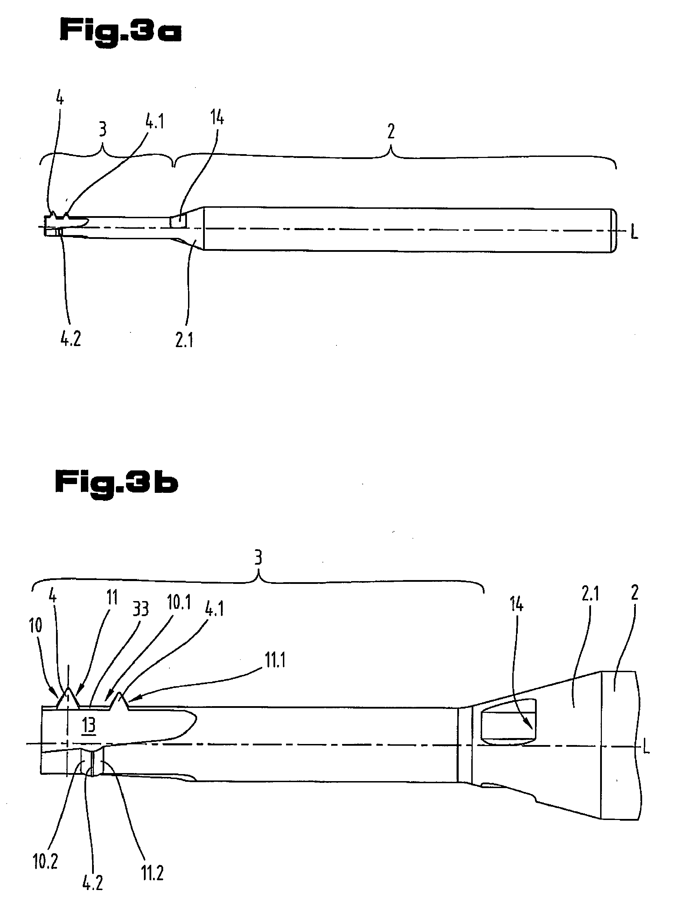

Eine besondere, weitere alternative Ausführungsform ist in der Fig. 3a gezeigt, wo ein Werkzeug 1 gezeigt wird mit einem sich in Längsrichtung L erstreckenden Schaft 2 welcher in einem Werkzeugkopf 3 endet und mit diesen über eine Schulter 2.1 verbunden ist. Auch bei dieser Ausführungsform sind laterale Kühlmittelöffnungen 14 an der Schulter 2.1 angeordnet. Der Werkzeugkopf endet in einer Reihe von Schneidzähnen 4, 4.1, 4.2 und weiteren aus dieser Perspektive nicht ersichtlichen Schneidelementen.

Obschon die beispielhaft gezeigten Werkzeuge alle einer im Wesentlichen triskelen Anordnung folgen, sind auch vier-, fünf- oder sechskantige Querschnitte durchaus denkbar.

Die Fig. 3b zeigt den Werkzeugkopf nochmals in Vergrösserung, wo die einzelnen Schneidelementen 4, 4.1 und 4.2 in ihrem Verhältnis zueinander besonders gut sichtbar werden. Zwei erste Schneidzähne 4, 4.1 befinden sich auf einer ersten Bearbeitungsachse Achse parallel zur Längsachse, während ein dritter Schneidzahn 4.2 auf einer zweiten Bearbeitungsachse parallel zur Längsachse angeordnet ist. Der Werkzeugkopf 3 läuft in Längsrichtung L von seinem proximalen Ende in eine Schulter 2.1 über, auf der Kühlmittelöffnungen 14 angeordnet sind. An seinem distalen Ende weist er zuerst ein erstes Schneidelement 4, mit einer ersten Stirnkante 10 und einer ersten Hinterkante 11 auf In einem Abstand 33 folgt nun in der gleichen Längsebene eine zweite Schneidkante 4.1, mit einer zweiten Stirnkante 10.1 und einer zweiten Hinterkante 11.1.

In einem Abstand einer Schneidzahnlücke 13 ist ein dritter Schneidzahn 4.2 angeordnet, welcher einen Abstand zu distalen Endfläche des Werkzeugkopfes 3 hat, der grösser ist als der des ersten Schneidzahns 4. In dieser Ausführungsform käme dieser dritte Schneidzahn 4.2 genau in die Lücke zwischen dem ersten Schneidzahn 4 und dem zweiten Schneidzahn 4.1 zu liegen. Auch dieser dritte Schneidzahn weist eine Stirnkante 10.2 und eine Hinterkante 11.2 auf.

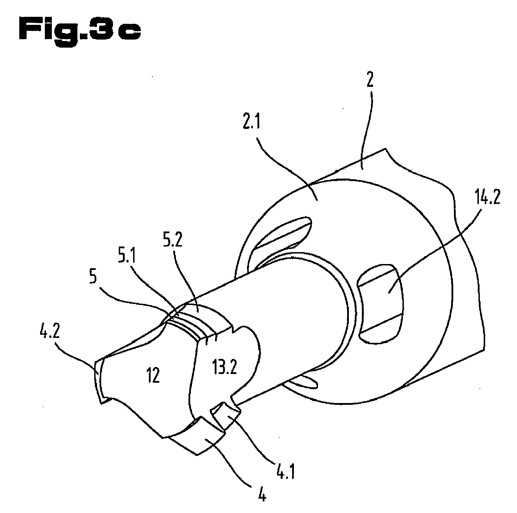

Die Fig. 3c zeigt den Werkzeugkopf der Fig. 3a in perspektivischer Ansicht. Sichtbar ist auch die im Wesentlichen triskele Anordnung der Schneidelemente 4,4.2 und 5. Man sieht auch, dass die Schneidelemente 4, 4.1 in der Achse versetzt zueinander angeordnet sind. Die Kühlöffnungen 14, 14.1 und 14.2 ordnen sich in einem Abstand von 120° auf der Schulter 2.1 an.

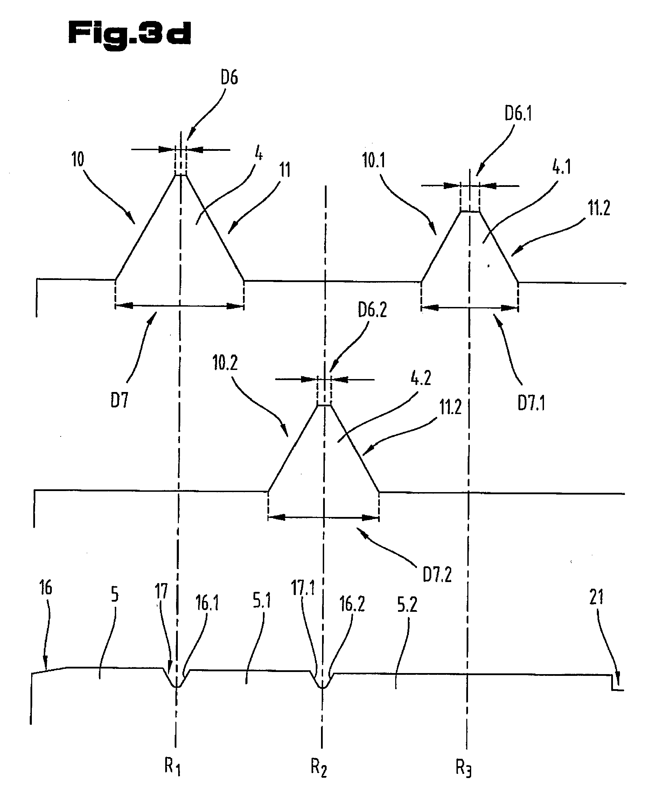

In der Fig. 3d werden die Schneidelemente 4, 4.1, 4.2, 5, 5.1 und 5.2 im Verhältnis zueinander und bezüglich dreier Senkrechten R₁ , R₂ und R₃ schematisch dargestellt. Die Senkrechten R1 , R2 und R3 stellen Senkrechte Ebenen zur Längsachse des Werkzeugs dar.
Vom distalen Ende ist das erste Schneidelemente eine erste Schneidbacke 5, welche durch eine Stirnkante 16 und eine Hinterkante 17 gebildet wird. Als nächstes folgt durch den Mittelpunkt des ersten Rotationsradius verlaufend ein erster Schneidzahn 4, mit einer Stirnkante 10 und einer Hinterkante 11. Der erste Schneidzahn weist einen Schneidzahngrat D₆ und eine Schneidzahnwurzel D₇ auf. Das Verhältnis der Breite zwischen dem Schneidzahngrat D₆ und der Schneidzahnwurzel D₇ beträgt in diesem Fall 1:13. Das nächste Schneidelement ist eine zweite Schneidbacke 5.1, welche zwischen den beiden Senkrechten R1 und R2 angeordnet ist und von einer Stirnkante 16.1 und einer Hinterkante 17.1 gebildet wird. Das vierte Schneidelement ist ein zweiter Schneidzahn 4.2, welcher ein geringeres Volumen aufweist als der erste Schneidzahn 4. Dieser Schneidzahn weist ebenfalls eine Stirnkante 10.2, und eine Hinterkante 11.2 auf. Auch dieser Schneidzahn 4.2 weist eine Breite des Schneidzahnrads D_{6.2} und eine Breite der Schneidzahnwurzel D_{7.2} auf. In diesem Fall ist das Verhältnis 1:9,25.

Es folgt eine dritte Schneidbacke 5.2, mit einer Stirnkante 16.2. Diese Schneidbacke besitzt keine Hinterkante, sondern endet direkt in einer Kerbe 21 im Anschluss an den Werkzeughals (nicht gezeigt). Ein letzter, dritter Schneidzahn 4.1, welcher ein kleineres Volumen aufweist als der Schneidzahn 4. 2 schliesst die Schneidelemente ab und verfügt über eine Stirnkante 10.1 und eine Hinterkante 11.2. Das Verhältnis zwischen der Breite des Schneidzahngrats D_{6.1} und der Breite der Schneidzahnwurzel D_{7.1} beträgt in diesem Fall 1:5,33.

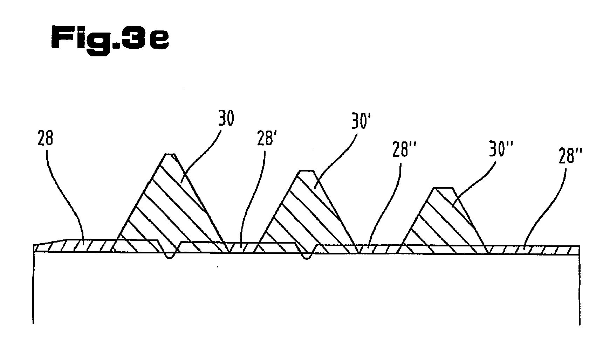

Wie ein derart angeordneter Werkzeugkopf ein Werkstück zu bearbeiten vermag wird schematisch in der Fig. 3e gezeigt. Die Schneidzähne greifen ins Werkstück dergestalt ein, dass die Ausnehmungen der Gewindenut 30, 30', 30" gebildet werden. Durch eine Nachbearbeitung der Schnittkanten durch die Schneidbacken, werden die Überschüsse 28, 28', 28" an den Rändern der Gewindenuten weiter entfernt. Es entstehen, entgratete hoch-präzise und saubere Gewinde.

Die Schneidbacken sind dabei stets so angeordnet, dass sie einem sukzessiven Bearbeitungsschritt nach dem Eingriff der Schneidzähne einen an den von den Schneidzähnen gebildeten Rändern verbleibeibender Überschuss entfernt wird. Auch sind die Schneidzähne so angeordnet, dass sie gemeinsam in einer sukzessiven Bearbeitung entweder durch eine Versetzung zueinander bezüglich einer Senkrechten zur Längsachse des Werkzeugs, oder durch verschiedene Schneidzahngeometrien, also Variation der Schneidzahngratbreite und Schneidzahnwurzelbreite eine einzige durchlaufende Gewindenut, welche sich spiralförmig entlang eines Werkstücks erstreckt bilden können. Dies kann über die Geometrie des Werzeugs wie hier beschrieben in Verbindung mit der Steuerung des Werkzeugs, wie bereits bekannt erreicht werden.

Die in dieser Anmeldung gezeigten konkreten Ausführungsformen sollen exemplarische Möglichkeiten innerhalb des erfinderischen Konzepts aufzeigen, und die Erfindung illustrieren. Selbstverständlich können einzelne Merkmale aus den einzelnen Ausführungsformen beliebig miteinander kombiniert werden, sofern sie dadurch ein sinnvolles Werkzeug zur materialabtragenden Bearbeitung eines Werkstücks bilden. Auch nicht gezeigte Alternativen mit viereckigen, fünfeckigen oder gar sechseckigen Profilquerschnitten, sowie Rundungen sind denkbar.

## Patentansprüche

1. Werkzeug (1) zur materialabtragenden Bearbeitung eines Werkstücks, wobei das Werkzeug (1) ein proximales und ein distales Ende aufweist, das Werkzeug (1) weiter umfassend:
a) einen Schaft (2), zur Verbindung des Werkzeugs (1) im Bereich des proximalen Endes mit einem Antrieb;
b) einen Werkzeugkopf (3) im Bereich des distalen Endes;
c) Schneidelemente (4, 4.1, ..., 4.5, 5, 5.1,..., 5.3) am Werkzeugkopf (3), wobei die Schneidelemente (4, 4.1 ...; 4.5, 5, 5.1,..., 5.3) so ausgestaltet sind, dass sie in das zu bearbeitende Werkstück einzudringen vermögen und eine Materialschicht aus dem besagten Werkstück abzutragen vermögen, und wobei
d) die Schneidelemente (4, 4.1, ...; 4.5, 5, 5.1,..., 5.3) mindestens einen Schneidzahn (4, 4.1, ..., 4.5) mit einem Schneidzahngrat (D₆, D_{6.1}, ... D_{6.5}) und einer Schneidzahnwurzel (D₇, D_{7.1}, ... D_{7.5}) und mindestens eine Schneidbacke (5, 5.1, ..., 5.5) mit einem Schneidbackengrat (D₈, D_{8.1}, ... D_{8.5}) und einer Schneidbackenwurzel (D₉, D_{9.1}, ... D_{9.5}) umfassen, und
**dadurch gekennzeichnet, dass**
das Verhältnis zwischen Schneidzahngrat (D₆, D_{6.1}, ... D_{6.5}) und Schneidzahnwurzel (D₇, D_{7.1}, ... D_{7.5}) kleiner ist, als das Verhältnis zwischen Schneidbackengrat (D₈, D_{8.1}, ... D_{8.5}) und Schneidbackenwurzel (D₉, D_{9.1}, ... D_{9.5}), insbesondere zwischen 2- und 10-Mal kleiner.

2. Werkzeug (1) gemäss Anspruch 1, wobei das Verhältnis zwischen Schneidzahngrat (6, 6.1, ..., 6.5) und Schneidzahnwurzel (7, 7.1, ..., 7.5) in einem Bereich von zwischen 1 zu 2 und 1 zu 25, bevorzugt von zwischen 1 zu 5 und 1 zu 20, weiter bevorzugt von zwischen 1 zu 10 und 1 zu 15 liegt.

3. Werkzeug (1) gemäss einem der Ansprüche 1 oder 2, wobei das Verhältnis zwischen Schneidbackengrat und Schneidbackenwurzel in einem Bereich von zwischen 1 zu 1 und 1 zu 1.9 liegt, bevorzugt von zwischen 1 zu 1.1 und 1 zu 1.75 liegt, besonders bevorzugt von zwischen 1 zu 1.3 und 1 zu 1.5 liegt.

4. Werkzeug (1) gemäss einem der Ansprüche 1 bis 3, wobei der mindestens eine Schneidzahngrat so ausgestaltet ist, dass er bei einer Rotation des Werkzeugs um seine Längsachse einen ersten Bearbeitungsradius definiert, und wobei der mindestens eine Schneidbackengrat (D₈, D_{8.1}, ... D_{8.5}) so ausgestaltet ist, dass sie bei einer Rotation des Werkzeugs um seine Längsachse einen zweiten Bearbeitungsradius definiert, und insbesondere wobei der erste Bearbeitungsradius grösser ist, als der zweite Bearbeitungsradius.

5. Werkzeug (1) gemäss einem der Ansprüche 1 bis 4, wobei die Schneidbacken so ausgestaltet sind, dass die Schneidbackengrate in ihrem Schneidbacken-Rotationsumfang um die Längsachse (L) die Schneidzahnwurzeln-Rotationsumfänge überragen, so dass eine von den Schneidzahnwurzeln gebildete erste Kante am Werkstück um die Breite der Schneidbacken abgetragen wird, insbesondere so dass ein Überschuss (28) abgetragen wird.

6. Werkzeug (1) gemäss einem der Ansprüche 1 bis 5, wobei der mindestens eine Schneidzahn eine Stirnkante (10) und eine Hinterkante (11) aufweist.

7. Werkzeug (1) gemäss einem der Ansprüche 1 bis 6, wobei das Werkzeug eine Mehrzahl an Kühlkanälen umfasst, welche sich parallel zur Längsachse (L) des Werkzeugs durch den Schaft erstrecken.

8. Werkzeug (1) gemäss Anspruch 7, wobei der Schaft (2) sich zum Werkzeugkopf (3) hin verjüngt, so dass eine Schulter (2.1) gebildet wird und die Kühlkanäle (20) Kühlöffnungen (14, 14.1, 14.2) auf dieser Schulter (2.1) aufweisen, und insbesondere wobei sich die Kühlöffnungen (14, 14.1, 14.2) auf dieser Schulter (2.1) radial um eine Längsachse (L) des Werkzeugs erstrecken, insbesondere wobei die Kühlöffnungen (14, 14.1, 14.2) eine im Wesentlichen halbmondförmige Form aufweisen.

9. Werkzeug (1) gemäss einem der Ansprüche 1 bis 8, umfassend Kühlmittelöffnungen (14, 14.1, 14.2), welche am Werkzeug (1) axial zur Längsachse und koaxial mit einer Schneidlücke 13, 13.1, 13.2 angeordnet sind..

10. Werkzeug (1) gemäss einem der Ansprüche 1 bis 9, umfassend eine Mehrzahl an Schneidzähnen (4, 4.1, 4.2), und wobei mindestens ein erster Schneidzahn (4) gegenüber einem zweiten Schneidzahn (4.1,4.2) so angeordnet sind, dass der erste und der zweite Schneidezahn einen überlappenden, aber nicht Deckungsgleichen Rotationsumfang (30, 30', 30") um die Längsachse (L) aufweisen.

11. Werkzeug (1) gemäss einem der Ansprüche 1 bis 10, umfassend eine Mehrzahl an Schneidbacken, und wobei mindestens eine erste Schneidbacke gegenüber einer zweiten Schneidbacke (4.1, 4.2) so angeordnet ist, so dass die erste und die zweite Schneidbacke einen überlappenden Rotationsumfang mit mindestens einem Schneidzahn aufweisen.

12. Werkzeug (1) gemäss einem der Ansprüche 1 bis 11, wobei das Werkzeug mit einer abrasionsresistenten Schicht beschichtet ist, insbesondere der Werkzeugkopf mit einer abrasionsresistenten Schicht beschichtet ist.

13. Verfahren zur Herstellung eines Formteils durch materialabtragende Bearbeitung eines Werkstücks mit einem Werkzeug (1), insbesondere mit einem Werkzeug gemäss einem der Ansprüche 1 bis 11, umfassend die Schritte:
a) Kontaktieren des Werkzeugs mit dem zu bearbeitenden Werkstück, so dass Schneidelemente des Werkzeugs in das bearbeitende Werkstück eindringen, und wobei
b) mindestens ein als Schneidzahn ausgestaltetes Schneidelement eine erste Ausnehmung (30, 30', 30") abträgt, welche im Wesentlichen der Form der Schneidzähne entspricht, und
c) mindesten ein als Schneidbacken ausgebildetes Schneidelement eine zweite Ausnehmung (28, 28', 28") abträgt, und
**dadurch gekennzeichnet, dass**
die mindestens eine Schneidbacke so ausgestaltet ist, dass sie die vom profilseitig im Wesentlichen keilförmigen Schneidzahn geschaffenen Keilfuss an seine breitesten Stelle aufzuweiten vermag.

14. Verfahren gemäss Anspruch 13, wobei Schneidzähne und Schneidbacken das Material sukzessive abtragen, so dass durch ein erstes bearbeitendes Schneidelement geschaffene erste Ausnehmungskanten von einem sukzessiven Bearbeitungsschritt durch ein anderes Schneidelement weiter abgetragen werden..

15. Verfahren gemäss einem der Ansprüche 13 oder 14, wobei das ein erster Schneidzahn eine erste Ausnehmung aus einem Werkstück abträgt, und wobei ein zweiter Schneidzahn eine zweite Ausnehmung aus dem Werkstück abträgt, welche mit der ersten Ausnahmung überlappt und eine erste Schneidbacke eine dritte Ausnehmung aus dem Werkstück abträgt, welche mit der ersten und/oder der zweiten Ausnehmung überlappt.

16. Formteil, erhältlich durch ein Verfahren gemäss Anspruch 13, wobei das Formteil mindestens eine helikale Profilkerbung umfasst.
